# EUROPEAN PATENT APPLICATION

(11) **EP 4 717 674 A1**
(43) Date of publication of application: **01.04.2026**
(21) Application number: 24830719.1
(22) Date of filing: 25.06.2024
(51) Int. Cl.: C01G 53/00, H01M 4/505, H01M 4/525, H01M 10/0525

(54) **LITHIUM-CONTAINING PRECURSOR OF POSITIVE ELECTRODE MATERIAL AND PREPARATION METHOD THEREFOR, POSITIVE ELECTRODE MATERIAL, AND LITHIUM SECONDARY BATTERY**

(30) Priority: 25.06.2023 CN 202310754274
(71) Applicant: Hunan Leaguer Hope Technology Co., Ltd., Zhuzhou, Hunan 412006 (CN)
(72) Inventor: LIU, Huiji, Zhuzhou, Hunan 412006 (CN); FU, Youtao, Zhuzhou, Hunan 412006 (CN)
(74) Representative: EIP
(86) International application number: PCT/CN2024/101115
(87) International publication number: WO 2025/002077

(57) **Abstract**

Provided in the present application are a lithium-containing precursor of a positive electrode material and a preparation method therefor, a positive electrode material, and a lithium secondary battery. The lithium-containing precursor of a positive electrode material satisfies the chemical formula Liₐ(NiₓCo_{y}Mn_{1-x-y})O₍₁₊ₐ₎(Li₂CO₃)_{z}, wherein a is 0.10-1.08; 0 < x < 1, 0 < y < 1, and x+y < 1; z is greater than 0 and less than or equal to 0.354, and the carbon content thereof is greater than 0 and less than or equal to 6.2 wt%. In the lithium-containing precursor of a positive electrode material disclosed in the present application, the production process flow of the positive electrode material is simplified by directly pre-sintering lithium into the precursor, such that decomposition of lithium carbonate into carbon dioxide is reduced, and carbon emissions are reduced; since lithium is directly pre-sintered into the precursor, the loss ratio of lithium during the sintering of the positive electrode material is reduced, thereby improving the finished product yield under the same bowl-loading amount, and greatly increasing the production capacity of a production line; and in addition, when the lithium-containing precursor of a positive electrode material in the present application is sintered, excessive wastewater is not generated, such that the lithium-containing precursor of a positive electrode material provided in the present application is more economical and environmentally friendly than traditional precursors.

## Description

The present application claims priority to Chinese Patent Application No. 202310754274.9 filed on June 25, 2023, the entire content of which is incorporated herein by reference as part of the present application.

### FIELD OF THE INVENTION

The present invention relates to the field of positive materials of lithium battery technology, and in particular, relates to a lithium-containing precursor of a positive electrode material, a preparation method thereof, a positive electrode material, and a lithium secondary battery.

### BACKGROUND OF THE INVENTION

With the rapid development of new energy vehicles, the demand for power batteries is increasing while greater challenges are faced. Furthermore, power batteries account for a high proportion of the cost of new energy vehicles, and positive electrode materials account for more than 60% of the cost of battery cells. The industry has consistently desired to reduce the cost of producing positive electrode materials.

In power batteries, traditional cathode materials are prepared by mixing a cathode material precursor with a lithium source, followed by multiple sintering steps. Therefore, the precursor determines the performance and cost of the cathode material. For example, traditional hydroxide precursors are prepared by the co-precipitation method. This method is prone to generating wastewater, the treatment of which is neither economical nor environmentally friendly.

As a result, there remains a need for developing one new precursor of a positive electrode material and/or positive electrode material, as well as a production process.

### SUMMARY OF THE INVENTION

The present inventors have diligently researched and developed a lithium-containing precursor of a positive electrode material, a preparation method thereof, a positive electrode material, and a lithium secondary battery, overcoming one or more of the aforementioned shortcomings in the prior art.

A first aspect of the present disclosure provides a lithium-containing precursor of a positive electrode material, which satisfies the chemical formulaLiₐ(NiₓCo_{y}Mn_{1-x-y})O₍₁₊ₐ₎ (Li₂CO₃)_{z}, wherein a is 0.10-1.08; 0 < x < 1, 0 < y < 1, and x + y < 1; z is greater than 0 and less than or equal to 0.354, and its carbon content is greater than 0 and less than or equal to 6.2 wt%.

The lithium-containing precursor of a positive electrode material disclosed in the present application is an oxide lithium-containing precursor. When sintering the lithium-containing precursor into a positive electrode material, no wastewater will be generated because there are no hydroxide groups. The lithium-containing precursor exists in the form of an oxide. Compared with traditional hydroxide precursors, the oxide precursor has a higher content of the main metals nickel, cobalt, and manganese while the precursor also contains lithium. When sintering into the positive electrode material, it reduces the lithium loss rate during sintering of the positive electrode material, increases the finished product yield under the same saggar loading amount, thereby increasing the production output when sintering into the positive electrode material, reducing the manufacturing cost of the positive electrode material, and greatly increasing production capacity of production lines.

A second aspect of the present disclosure provides a method for preparing a lithium-containing precursor of a positive electrode material, comprising the following steps:
preparing a mixed solution of lithium nitrate, nickel nitrate, cobalt nitrate, and manganese nitrate;
performing an atomization roasting treatment on the mixed solution to obtain the aforementioned lithium-containing precursor of a positive electrode material, the temperature of the atomization roasting treatment being 400°C-1000°C, and the air-to-gas ratio of roasting furnace is less than 10.

Since the precursor prepared by this preparation method is the aforementioned lithium-containing precursor, the preparation method of the lithium-containing precursor also inherits the technical effects of the lithium-containing precursor. Meanwhile, in the present application, the lithium-containing precursor is formed through atomization roasting. Compared with the hydroxide precursor prepared by the co-precipitation method, the process flow in the present application is simple, with fewer intermediate steps, and the reaction process is easy to flexibly control. Performing roasting treatment simultaneously with atomization not only ensures the product has a smaller particle size, but also the reaction speed is fast. The actual reaction time to obtain the lithium-containing precursor material via atomization roasting is only a few seconds, resulting in high production efficiency. Additionally, since the anions in the salt solution are converted into gaseous substances for removal or recovery in the high-temperature environment, the raw material utilization rate is high, the impurity content in the product is low, and the performance is excellent. Meanwhile, the lithium-containing precursor material product prepared by this method, where the material itself has more excellent structural stability compared to the traditional co-precipitation method.

A third aspect of the present disclosure provides a positive electrode material, and the said cathode material is formed by sintering the aforementioned lithium-containing precursor of the positive electrode material.

A fourth aspect of the present disclosure provides a method for preparing a positive electrode material, which is formed by sintering the aforementioned precursor of the positive electrode material, after maintaining at a first temperature of 400°C-800°C for 1-5 h and maintaining at a second temperature of 800°C-1050°C for 5-10 h.

Since the positive electrode material is sintered from the aforementioned lithium-containing precursor, the positive electrode material also inherits the technical effects of the lithium-containing precursor. When preparing positive electrode material from a hydroxide precursor, the positive electrode hydroxide precursor usually needs to be solid-mixed with a lithium source and then subjected to high-temperature sintering. However, due to uneven mixing between solids and the slow diffusion rate of lithium in the solid phase, it may be difficult to achieve uniform lithium distribution. Non-uniform lithium distribution will severely affect the electrochemical performance of the positive electrode material. When preparing the positive electrode material from the lithium-containing precursor of the present application, since the lithium-containing precursor itself contains lithium, only a small amount of lithium source needs to be supplemented or no lithium source needs to be supplemented to directly sinter into the positive electrode material during positive electrode material preparation, making the lithium distribution more uniform and improving the electrochemical performance of the positive electrode material. In another aspect, by pre-burning lithium directly into the precursor, the subsequent step of mixing the precursor with the lithium source is reduced, simplifying the positive electrode material production process. Compared with the traditional process of sintering the precursor with lithium carbonate, it reduces the decomposition of lithium carbonate into carbon dioxide, lowering carbon emissions; because lithium is directly pre-burned into the precursor, the temperature for the lithium-containing precursor of the present application when sintering into the positive electrode material is lower than the temperature for the traditional precursor when sintering into the positive electrode material under the same conditions, thus reducing sintering costs. In still another aspect, since precursor suppliers and lithium source suppliers are usually independent, it is challenging for downstream positive electrode material manufacturers to strictly control the product quality and batch stability of both precursor and lithium source suppliers, which is not conducive to the stability of positive electrode material preparation. The lithium-containing precursor of the present application itself contains lithium, thus, to some extent, solving the raw material supply problem for positive electrode material producers and improving the stability of positive electrode material preparation.

A fifth aspect of the present disclosure provides a secondary battery, wherein a positive electrode sheet of the secondary battery comprises the aforementioned positive electrode material.

Since the lithium secondary battery comprises the aforementioned positive electrode material, the lithium secondary battery also inherits the technical effects of the positive electrode material.

### BRIEF DESCRIPTION OF DRAWINGS

In order to illustrate the technical solutions of the embodiments of the present invention more clearly, the accompanying drawings of the embodiments will be briefly described below. It is obvious that the drawings in the following description only relate to some embodiments of the present invention, instead of limiting to the present invention.
FIG. 1 is an SEM photograph of the lithium-containing precursor of a positive electrode material of Example 1 of the present disclosure at a magnification of 1000 times.
FIG. 2 is an SEM photograph of the lithium-containing precursor of a positive electrode material of Example 1 of the present disclosure at a magnification of 10.0K times.
FIG. 3 is an SEM photograph of the lithium-containing precursor of a positive electrode material of Example 1 of the present disclosure at a magnification of 50.0K times.
FIG. 4 is an XRD pattern of the lithium-containing precursor of a positive electrode material of Example 1 of the present disclosure.
FIG. 5 is an SEM photograph of the positive electrode material of Example 1 of the present disclosure.
FIG. 6 is an XRD pattern of the positive electrode material of Example 1 of the present disclosure.

### DETAILED DESCRIPTION

The present invention may be implemented in other specific forms without deviating from its essential attributes. It should be understood that, under the premise of no conflict, any and all implementation schemes of the present invention may be combined with the technical features in any other implementation scheme or multiple other implementation schemes to obtain additional implementation schemes. The present invention includes such additionally obtained implementation schemes.

All publications and patents cited in the present disclosure are incorporated herein by reference in their entirety. If any usage or terminology in the incorporated publications and patents conflicts with the usage or terminology used in the present disclosure, the usage and terminology of the present disclosure shall prevail.

The section headings used herein are for organizational purposes only and should not be construed as limiting the described subject matter.

Unless otherwise specified, all technical and scientific terms used herein have the ordinary meaning in the field of the claimed subject matter. In the event of multiple definitions for a term, the definition herein shall prevail.

Unless stated otherwise in the working examples or otherwise indicated, all numbers expressing quantitative properties such as particle size stated in the specification and claims are to be understood as being modified in all instances by the term "about". It should also be understood that any numerical range recited in the present application is intended to include all sub-ranges within that range and any combination of the endpoints of the range or sub-ranges.

The use of terms such as "comprising", "containing" or "including" and the like in the present disclosure means that the element appearing before such term encompasses the elements enumerated after such term and their equivalents, without excluding unrecited elements. The terms "containing" or "including" as used herein may be open-ended, semi-closed, or closed. In other words, the terms also include "consisting essentially of" or "consisting of".

The term "optional" in the present disclosure means that the described circumstance may or may not occur.

The term "positive electrode material precursor" in the present disclosure refers to the substance before the high-temperature sintering step in the preparation of the positive electrode material (hereinafter, sometimes referred to as "precursor" or "precursor material"). The term "lithium-containing precursor of a positive electrode material" refers to the aforementioned positive electrode material precursor which contains lithium.

The expression of term "Li", unless specifically stated otherwise, does not represent elemental lithium metal, but represents the Li element. The same applies to the expressions for other elements such as Ni, Co, and Mn.

### <Lithium-Containing Precursor of Positive electrode Material>

A first aspect of the present disclosure provides a lithium-containing precursor of a positive electrode material, which comprises lithium nickel cobalt manganese oxide and lithium carbonate. In one embodiment, the lithium-containing precursor of a positive electrode material consists essentially of lithium nickel cobalt manganese oxide and lithium carbonate. For example, the total weight of lithium nickel cobalt manganese oxide and lithium carbonate in the lithium-containing precursor of a positive electrode material accounts for more than 96.0 wt% of the precursor, for example, more than 97.0 wt%, more than 98.0 wt%, more than 99.0 wt%, more than 99.1 wt%, more than 99.2 wt%, more than 99.3 wt%, more than 99.4 wt%, more than 99.5 wt%, more than 99.6 wt%, more than 99.7 wt%, more than 99.8 wt%, more than 99.9 wt%.

Precursors in the prior art do not contain lithium, when preparing a positive electrode material from the precursor, it is required first to mix the precursor with a lithium source, and then the precursor and lithium source are placed together in a roasting furnace for sintering to enable the lithium from the lithium source to enter the molecular structure to form the positive electrode material. Whereas the lithium-containing precursor of the present application has lithium; when preparing the positive electrode material from the lithium-containing precursor, it can be sintered to form the positive electrode material without supplementing a lithium source or by supplementing only a small amount of lithium source.

The precursor in the present application contains lithium, and is represented by the following general formula:

Liₐ(NiₓCo_{y}Mn_{1-x-y})O₍₁₊ₐ₎ (Li₂CO₃)_{z} (I),

wherein a is 0.10-1.08; 0 < x < 1, 0 < y < 1, and x + y < 1; z is greater than 0 and less than or equal to 0.354, and its carbon content is greater than 0 and less than or equal to 6.2 wt%.

Considering that sufficient lithium is burned into the lithium-containing precursor, the carbon content is preferably 0.05 wt% or more. When considering that when sintering the lithium-containing precursor into a positive electrode material, excessive carbon may lead to the formation of free lithium, which would affect the electrochemical performance when this lithium-containing precursor is applied to the lithium secondary battery, the carbon content is therefore 6.2 wt% or less.

In a preferred embodiment, the carbon content in the lithium-containing precursor of a positive electrode material is preferably 0.05 wt%-2.0 wt%, for example, 0.05 wt%, 0.06 wt%, 0.07 wt%, 0.08 wt%, 0.09 wt%, 0.1 wt%, 0.2 wt%, 0.3 wt%, 0.4 wt%, 0.5 wt%, 0.6 wt%, 0.7 wt%, 0.8 wt%, 0.9 wt%, 1.0 wt%, 1.1 wt%, 1.2 wt%, 1.3 wt%, 1.4 wt%, 1.5 wt%, 1.6 wt%, 1.7 wt%, 1.8 wt%, 1.9 wt%, or 2.0 wt%.

Selecting a carbon content in the range of 0.05 wt% to 2.0 wt% not only ensures that the lithium-containing precursor contains sufficient lithium but also prevents the formation of excessive free lithium in the positive electrode material, while additionally reducing carbon emissions during the sintering process.

From the viewpoint of obtaining a lithium secondary battery with high reversible capacity, x in the above formula (I) is preferably 0.5 or more, more preferably 0.55 or more, and particularly preferably 0.8 or more. Furthermore, from the viewpoint of obtaining a lithium secondary battery with higher initial charge/discharge efficiency, x is preferably less than 1.0, more preferably 0.95 or less, and particularly preferably 0.9 or less.

The upper and lower limit values of x can be arbitrarily combined. For example, x is preferably 0.4 or more and less than 1.0, more preferably 0.50 or more and 0.90 or less, and further preferably 0.55 or more and 0.80 or less.
Specifically, x can be selected as 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90.

Furthermore, from the viewpoint of obtaining a lithium secondary battery with low battery resistance, y in the above formula (I) is preferably 0.01 or more, and further preferably 0.05 or more. Additionally, from the viewpoint of obtaining a lithium secondary battery with high thermal stability, y is preferably 0.40 or less, more preferably 0.19 or less, and further preferably 0.20 or less.

The upper and lower limit values of y can be arbitrarily combined. For example, y is 0.01 or more and 0.40 or less, more preferably is 0.01 or more and 0.29 or less, and further preferably is 0.05 or more and 0.20 or less.
Specifically, y can be selected as 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40.

Furthermore, from the viewpoint of obtaining a lithium secondary battery with high thermal stability, 1-x-y in the above compositional formula (I) is preferably 0.01 or more, and further preferably 0.05 or more. Additionally, from the viewpoint of obtaining a lithium secondary battery with high storage characteristics at high temperature (e.g., in a 60°C environment), 1-x-y in the above compositional formula (I) is preferably 0.40 or less, more preferably 0.30 or less, and further preferably 0.18 or less.
Specifically, 1-x-y can be selected as 0.01, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40.

In a preferred embodiment, in the chemical formula Liₐ(NiₓCo_{y}Mn_{1-x-y})O₂·(Li₂CO₃)_{z} of the lithium-containing precursor of cathode material, 0.55 ≤ x ≤ 0.80, 0.05 ≤ y ≤ 0.20, and 0.08 ≤ 1-x-y ≤ 0.30.

Furthermore, from the viewpoint of shortening the process flow and improving the finished product yield under the same saggar loading amount, a in the above compositional formula (I) is preferably 0.10 or more, more preferably 0.50 or more, and further preferably 1.0 or more. Additionally, from the viewpoint of maintaining a lithium secondary battery with high cycle performance, a in the above compositional formula (I) is preferably 1.2 or less, more preferably 1.1 or less, and further preferably 1.08 or less.

Specifically, the value range of a is 1 < a ≤ 1.08. In this way, the lithium-containing precursor of a positive electrode material can be sintered to prepare the positive electrode material without mixing with an additional lithium source. This reduces the process of mixing the precursor with the lithium source, thereby reducing costs. Meanwhile, because the lithium-containing precursor already has sufficient lithium, when sintering into the positive electrode material, it can reduce the lithium loss rate and improve the finished product yield under the same saggar loading amount. In a more preferred embodiment, the value of a in (I) is 1.01 to 1.06. This can further reduce the lithium loss rate when sintering the precursor into the positive electrode material and improve the finished product yield under the same saggar loading amount.

If 0.10 ≤ a ≤ 0.50, then when preparing the precursor, recovered materials obtained from recycling used lithium batteries can be utilized. The recovered materials contain a small amount of lithium. Using the recovered materials as raw materials to prepare the lithium-containing precursor can reduce the lithium loss rate and lower production costs. If 0.50 ≤ a ≤ 1.00, then when preparing the positive electrode material, only a small amount of lithium source needs to be supplemented. The positive electrode material prepared using the lithium-containing precursor within this range has less free lithium, which is beneficial for improving the electrochemical performance of the positive electrode material.

Specifically, a can be selected as 0.10, 0.11, 0.12, 0.13, 0.14, 0.15, 0.16, 0.17, 0.18, 0.19, 0.20, 0.21, 0.22, 0.23, 0.24, 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, 0.99, 1.00, 1.01, 1.02, 1.03, 1.04, 1.05, 1.06, 1.07, 1.08, and the like.

Taking into comprehensive consideration the ease extent of preparation and cost of the precursor, as well as the subsequent preparation of the cathode material, preferably 0.05 ≤ z ≤ 0.20.

By adjusting the ratio of each metal element in the lithium-containing precursor, the lithium secondary battery can have higher initial charge/discharge efficiency, improved finished product yield under the same saggar loading amount, a simpler process, and higher thermal stability.

For example, it can be specifically selected as:

Li_{0.72}(Ni_{0.55}Co_{0.23}Mn_{0.22})O_{1.72}(Li₂CO₃)_{0.15},

Li_{0.72}(Ni_{0.67}Co_{0.05}Mn_{0.28})O_{1.72}(Li₂CO₃)_{0.15},

Li_{0.62}(Ni_{0.80}Co_{0.01}Mn_{0.10})O_{1.62}(Li₂CO₃)_{0.20},

Li_{0.70}(Ni_{0.77}Co_{0.13}Mn_{0.10})O_{1.70}(Li₂CO₃)_{0.15},

Li_{0.70}(Ni_{0.90}Co_{0.05}Mn_{0.05})O_{1.70}(Li₂CO₃)_{0.15}, and the like.

### [Composition Analysis]

The composition analysis of the lithium-containing precursor is performed by adding the obtained lithium-containing precursor powder into a 100 mL beaker, adding 6 mL of hydrochloric acid and 2 mL of nitric acid for digestion, cooling, then suction filtering (if necessary), making up to volume in a 250 mL volumetric flask, pipetting 5 mL into a 100 mL volumetric flask with a 5 mL pipette, adding 2 mL of nitric acid, making up to volume, and testing the Li, Ni, Co, Mn, and the like. content using a Thermo Fisher ICP-OES.

The carbon content was tested using a Wanlianda CS-901B high-frequency infrared carbon-sulfur analyzer (instrument manufacturer: Wanlianda, model: CS-901B6). Impurity test: A ceramic crucible was burned at 900°C for 4 h and then cooled to room temperature. First, three sets of standard samples were tested for calibration. Then, 0.4 ± 0.01 g of iron flux was weighed into the crucible. After zeroing the balance, a certain amount of lithium-containing precursor sample was weighed, and a spoonful of tungsten granules was added. The lithium-containing precursor sample was then placed on the instrument for testing by clicking analyze, and the data was output. The lithium-containing precursor of a positive electrode material disclosed in the present application is an oxide lithium-containing precursor. When sintering the lithium-containing precursor into a positive electrode material, no wastewater will be generated because there are no hydroxide groups. The lithium-containing precursor exists in the form of an oxide. Compared with traditional hydroxide precursors, the oxide precursor has a higher content of the main metals nickel, cobalt, and manganese while the precursor also contains lithium. When sintering into the positive electrode material, it reduces the lithium loss rate during sintering of the positive electrode material, increases the finished product yield under the same saggar loading amount, thereby increasing the production output when sintering into the positive electrode material, reducing the manufacturing cost of the positive electrode material, and greatly increasing production capacity of production lines.

In one embodiment, the lithium-containing precursor of a positive electrode material includes at least one sheet-like agglomerate formed by the agglomeration of primary particles.

It should be noted that the lithium-containing precursor may include a plurality of sheet-like agglomerates. There is a gap between the sheet-like agglomerates, and the gap is in the range of 1 nm to 1 µm. For example, the lithium-containing precursor includes 2 sheet-like agglomerates, 3 sheet-like agglomerates, 4 sheet-like agglomerates, and the like. The number of sheet-like agglomerates is not specifically limited in the embodiments of the present application.

For example, observed by SEM, the lithium-containing precursor of a positive electrode material after the spheres are broken is in irregular sheet-like form. The maximum thickness of the sheet-like agglomerate is 0.1-7 µm, the maximum length is 0.1-19 µm, and the maximum width is 0.1-30 µm. In order to improve the electrode density when made into a positive electrode for a lithium secondary battery and increase the volumetric capacity density, it is preferable that the maximum thickness of the sheet-like agglomerate is 0.2-6 µm, the maximum length is 1.0-15 µm, and the maximum width is 1.0-15 µm. To further improve the electrode density when made into a positive electrode for a lithium secondary battery and increase the volumetric capacity density, it is more preferable that the maximum thickness of the sheet-like agglomerate is 2-5 µm, the maximum length is 3-10 µm, and the maximum width is 3 µm -10 µm. Specifically, the maximum thickness of the sheet-like agglomerate can be selected as 0.1 µm, 1 µm, 2 µm, 3 µm, 4 µm, 5 µm, 6 µm, 7 µm, and the like. In particular, the maximum length of the sheet-like agglomerate can be selected as 0.1 µm, 1 µm, 2 µm, 3 µm, 4 µm, 5 µm, 8 µm, 10 µm, 15 µm, 19 µm, and the like. Specifically, the maximum width of the sheet-like agglomerate can be selected as 0.1 µm, 1 µm, 2 µm, 3 µm, 4 µm, 5 µm, 8 µm, 10 µm, 15 µm, 19 µm, and the like.

When using a positive electrode material manufactured by the lithium-containing precursor of the present application, because excessive crystal growth has not occurred, the moving resistance of lithium ions is not prone to increase. Using the precursor of the present application to manufacture a positive electrode material easily forms a state where lithium ions are uniformly distributed within the particles. The lithium ion conductivity of such a positive electrode material is easily improved. The cycle retention rate of a lithium secondary battery can be improved when using such a positive electrode material.

Conventional ternary hydroxide precursor materials after the spheres are broken, observed by SEM, are usually spherical or nearly spherical.

The term "primary particle" in the present application refers to a particle that appears to have no grain boundaries when observed at a magnification of 5000 times or more and 20000 times or less using a scanning electron microscope or the like.

The term "agglomerate" in the present application refers to particles formed by the agglomeration of the aforementioned primary particles, and a sheet-like agglomerate further refers to such particles having a sheet-like or substantially sheet-like shape.

### [SEM Measurement]

A tungsten filament scanning electron microscope manufactured by Tescan, model VEGA LMS, is used to observe the morphology of the material. An electron beam with an accelerating voltage of 10 keV and a working distance of 5 mm is used for SEM observation.

In one embodiment, the lithium-containing precursor of a positive electrode material is a sheet-like agglomerate, and the agglomerate is formed by the agglomeration of multiple primary particles of 100 nm or less. To improve the electrode density when made into a positive electrode for a lithium secondary battery and increase the volumetric capacity density, it is preferable that the primary particles are 90 nm or less, and more preferably, the primary particles are 80 nm or less and 50 nm or more. Specifically, the particle size of the primary particles can be 100 nm,90 nm, 80 nm, 70 nm, 60 nm, 50 nm, and the like.

When the primary particles are 100 nm or less, the interfaces between primary particles are few, and the positive electrode material particles are less prone to cracking during charging and discharging. The positive electrode material manufactured using the lithium-containing precursor of this embodiment as a raw material is less prone to generating resistance, therefore, the cycle retention rate of the lithium secondary battery can be improved.

The lithium-containing precursor of cathode material of the present disclosure has a diffraction peak at 20 of 31.7±0.3 degrees in a powder X-ray diffraction pattern using Cu-Kα radiation, which is believed to be a characteristic peak of lithium carbonate, indicating that the precursor contains lithium carbonate.

In one embodiment, the lithium-containing precursor of cathode material has diffraction peaks at 20 of 18.6±0.3, 21.2±0.3, 30.5±0.3, 31.7±0.3, 36.4±0.3, 38.0±0.3, 44.1±0.3, 48.4±0.3, 58.3±0.3, 64.2±0.3, and 67.7±0.3 degrees in a powder X-ray diffraction pattern using Cu-Kα radiation.

In the lithium-containing precursor of the present application, in the powder X-ray diffraction pattern using Cu-Kα radiation, there are diffraction peaks at 2θ = 48.4±0.3, 20 = 58.3±0.3, and 2θ = 67.7±0.3 degrees, indicating that lithium has been pre-burned into the precursor in the present application. Because the lithium-containing precursor already contains lithium, when preparing the positive electrode material using the lithium-containing precursor, the step of mixing the precursor with a lithium source is reduced, simplifying the positive electrode material production process. Compared with the traditional process of sintering the precursor with lithium carbonate, it reduces the decomposition of lithium carbonate into carbon dioxide, lowering carbon emissions. By directly pre-burning lithium into the precursor, the lithium loss rate during sintering of the positive electrode material is reduced, thus improving the finished product yield under the same saggar loading amount and greatly increasing production capacity of production lines. Additionally, when sintering the lithium-containing precursor of the present application, the sintering temperature for forming the positive electrode material is lower compared to the traditional precursor under the same conditions, thus reducing sintering costs.

### [Powder X-ray Diffraction Measurement]

In this specification, powder X-ray diffraction measurement can be performed using an X-ray diffractometer. As the X-ray diffractometer, for example, Ultima IV can be used.

Specifically, the powder of the lithium-containing precursor is filled into a dedicated substrate, and using a Cu-Kα radiation source, measurement is performed under conditions of a diffraction angle 2θ = 10°-90°, an operating voltage of 40 kV, a sampling width of 0.002°, and a scanning speed of 5°/min, to obtain a powder X-ray diffraction spectrum.

The powder X-ray diffraction pattern of the lithium-containing precursor of a positive electrode material using Cu-Kα radiation indicates that the precursor has a layered structure.

The peaks within the ranges of 2θ = 18.6±0.3, 21.2±0.3, 30.5±0.3, 31.7±0.3, 36.4±0.3, 38.0±0.3, 44.1±0.3, 48.4±0.3, 58.3±0.3, 64.2±0.3, and 67.7±0.3 degrees are determined from the obtained X-ray diffraction spectrum.

In one embodiment, in the powder X-ray diffraction pattern of the lithium-containing precursor of a positive electrode material using Cu-Kα radiation, the ratio of the half-peak width α of the peak present at 2θ of 18.6±0.3 degrees to the half-peak width β of the peak present at 20 of 44.1±0.3 degrees is 1.1 to 1.4.

The upper and lower limit values of the half-peak width ratio (α/β) can be arbitrarily combined.

For example, the half-peak width ratio (α/β) is preferably 1.2 or more and 1.3 or less.

In this embodiment, it is believed that if ratio (α/β) is within the specified range above, when sintering the lithium-containing precursor into the positive electrode material, the particles grow regularly. Therefore, it can be inferred that the positive electrode material prepared from the lithium-containing precursor of the present application can improve the initial charge/discharge efficiency when used in a lithium secondary battery. Meanwhile, after the lithium-containing precursor satisfying the specified α/β range above is prepared into a positive electrode material, due to the small moving resistance of lithium ions associated with charging and discharging, the cycle retention rate of the lithium secondary battery can be improved.

In some embodiments, the range of the half-peak width α is 0.60 to 0.80 degrees, and the range of the half-peak width β is 0.40 to 0.60 degrees. The upper and lower limit values of α and β can be arbitrarily combined.

For example, α is preferably 0.61 or more and 0.79 or less, more preferably 0.65 or more and 0.75 or less, and further preferably 0.68 or more and 0.73 or less. β is preferably 0.41 or more and 0.58 or less, more preferably 0.43 or more and 0.56 or less, and further preferably 0.45 or more and 0.55 or less.

For example, α can be selected as 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, or 0.80 degrees. β can be selected as 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, or 0.60 degrees. For example, α is preferably 0.61 or more and 0.79 or less, more preferably 0.65 or more and 0.75 or less, and further preferably 0.68 or more and 0.73 or less. β is preferably 0.41 or more and 0.58 or less, more preferably 0.43 or more and 0.56 or less, and further preferably 0.45 or more and 0.55 or less.

For example, α can be selected as 0.60, 0.61, 0.62, 0.63, 0.64, 0.65, 0.66, 0.67, 0.68, 0.69, 0.70, 0.71, 0.72, 0.73, 0.74, 0.75, 0.76, 0.77, 0.78, 0.79, or 0.80 degrees. β can be selected as 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, or 0.60 degrees.

In this embodiment, it is believed that if (α/β) is within the specified range above, when sintering the lithium-containing precursor into the positive electrode material, the particles grow regularly. Therefore, it can be inferred that the positive electrode material prepared from the lithium-containing precursor of the present application can improve the initial charge/discharge efficiency when used in a lithium secondary battery. Meanwhile, after the lithium-containing precursor satisfying the specified α/β range above is prepared into a positive electrode material, due to the small moving resistance of lithium ions associated with charging and discharging, the cycle retention rate of the lithium secondary battery can be improved.

In this embodiment, the half-peak width α of the peak present within the diffraction angle range of 2θ = 18.6±0.3° (hereinafter sometimes referred to as "Peak A") and the half-peak width β of the peak present within the range of 20 = 44.1±0.3° (hereinafter sometimes referred to as "Peak B") can be calculated by the following method. First, perform a powder X-ray diffraction measurement on the precursor using Cu-Kα as the radiation source and with a measurement range of diffraction angle 2θ set from 10° to 90°, and identify Peak A and Peak B. Next, approximate the profile of each diffraction peak with a Gaussian function, and calculate the half-peak width α and half-peak width β by multiplying the difference in 2θ between the two points where the value of the second derivative curve becomes zero by a coefficient of 2ln2 (≈ 1.386) (for example, refer to "Practical Powder X-ray Analysis - Introduction to the Rietveld Method", 7th printing issued June 20, 2006, by Izumi Nakai and Fujio Izumi).

In a preferred embodiment, in the powder X-ray diffraction pattern using Cu-Kα radiation, the peak intensity at 2θ of 18.6±0.3 degrees is Iₐ, the peak intensity at 2θ of 44.1±0.3 degrees is I_{b}, and the peak intensity ratio of Iₐ to I_{b} is greater than or equal to 0.2 and less than 1.

The upper and lower limit values of the peak intensity ratio (Iₐ/I_{b}) can be arbitrarily combined.

For example, the peak intensity ratio (Iₐ/I_{b}) is preferably 0.22 or more and 0.99 or less, more preferably 0.30 or more and 0.95 or less, and further preferably 0.7 or more and 0.9 or less.

Specifically, Iₐ/I_{b} can be selected as 0.25, 0.3, 0.4, 0.5, 0.6, 0.7, 0.8 or 0.9, and the like.

The peak at 2θ of 18.6±0.3 degrees is generally considered the (003) peak, and the peak at 20 of 44.1±0.3 degrees is generally considered the (104) peak. The ratio of the intensities of these two peaks can reflect the degree of cation mixing in the material. Typically, a higher I(003)/I(104) value indicates a lower degree of cation mixing in the lattice. An excessively high degree of cation mixing will hinder the deintercalation of Li⁺, leading to a decrease in the Li⁺ diffusion coefficient and deterioration of the material's electrochemical performance. The I(003)/I(104) value of positive electrode materials is typically significantly higher than 1.2, indicating lower cation mixing. The peak intensity Iₐ at 20 of 18.6±0.3 degrees of lithium-containing precursors of a positive electrode material is less than the peak intensity I_{b} at 2θ of 44.1±0.3 degrees. Therefore, their ratio is less than 1, indicating that the lithium-containing nickel cobalt manganese positive electrode precursor has a relatively higher degree of cation mixing compared to nickel cobalt manganese positive electrode materials and still requires sintering to reduce cation mixing. Whereas after preparing the positive electrode material using the lithium-containing precursor of the present application, the I(003)/I(104) value of the positive electrode material is typically significantly higher than 1.2. Therefore, it can be inferred that the positive electrode material prepared from the lithium-containing precursor of the present application can improve the initial charge/discharge efficiency when used in a lithium secondary battery. After preparing the lithium-containing precursor satisfying the specified Iₐ/I_{b} range above into the positive electrode material, cation mixing is reduced, which can improve the cycle retention rate of the lithium secondary battery.

In one embodiment, in the XRD pattern of the lithium-containing precursor of a positive electrode material, the half-peak width of the peak at 2θ of 18.6±0.3 degrees is 0.60-0.80 degrees, for example, is 0.63 degrees, and the half-peak width of the peak at 20 of 44.1±0.3 degrees is 0.40-0.60 degrees, for example, 0.49 degrees. The smaller half-peak widths of the peaks at 2θ of 18.6±0.3 degrees and 44.1±0.3 degrees in the XRD pattern of the lithium-containing precursor of a positive electrode material indicate good peak shape and relatively good crystallinity. However, the half-peak widths are larger than those of corresponding nickel cobalt manganese positive electrode materials, indicating that the crystallinity of the lithium-containing precursor of a positive electrode material is still inferior to that of nickel cobalt manganese positive electrode materials.

In one embodiment, the ratio of a tapped bulk density (TBD) to a loose bulk density (LBD) of the lithium-containing precursor of a positive electrode material is 2 or more.

The upper and lower limit values of the ratio of tapped bulk density (TBD) to loose bulk density (LBD) can be arbitrarily combined.

From the viewpoint of obtaining a lithium secondary battery with high electrode density, for example, (TBD/LBD) is preferably 2 or more. There is no upper limit for the TBD/LBD value. However, if the relationship between TBD and LBD becomes unbalanced, the particle shape becomes more uneven, or the particle packing properties deteriorate. In such cases, after preparing the positive electrode material from the lithium-containing precursor, the electrode density of the lithium secondary battery would be further affected.

The lower limit of TBD/LBD for the aforementioned lithium-containing precursor is 2, preferably 2.1, more preferably 2.5, further preferably 2.8, and even more preferably 3. The upper limit of TBD/LBD for the aforementioned lithium-containing precursor is not particularly limited, but the upper limit is preferably 8, more preferably 6. For example, the TBD/LBD value of the aforementioned lithium-containing precursor can be in the range of 2 to 8, or in the range of 2.3 to 5.1.

For example, TBD/LBD can be 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0.

In this embodiment, from the viewpoint of obtaining a lithium secondary battery with high electrode density, the tapped bulk density of the lithium-containing precursor is preferably 0.8 g/cm³ or more, more preferably 1.2 g/cm³ or more, and particularly preferably 1.4 g/cm³ or more. Furthermore, from the viewpoint of increasing the unit saggar loading amount, thereby increasing the production output when sintering into the positive electrode material and reducing the manufacturing cost of the positive electrode material, the tapped bulk density is preferably 2.5 g/cm³ or less, more preferably 2.0 g/cm³ or less, and particularly preferably 1.9 g/cm³ or less.

The upper and lower limit values of the tapped bulk density can be arbitrarily combined. For example, the tapped bulk density is preferably 1.0 g/cm³ or more and 2.2 g/cm³ or less, more preferably 1.2 g/cm³ or more and 2.0 g/cm³ or less, and further preferably 1.4 g/cm³ or more and 1.9 g/cm³ or less.

In this embodiment, from the viewpoint of obtaining a lithium secondary battery with high electrode density, the loose bulk density of the lithium-containing precursor is preferably 0.4 g/cm³ or more, more preferably 0.41 g/cm³ or more, and particularly preferably 0.45 g/cm³ or more. Furthermore, from the viewpoint of increasing the unit saggar loading amount, thereby increasing the production output when sintering into the positive electrode material and reducing the manufacturing cost of the positive electrode material, the it is preferably 0.9 g/cm³ or less, more preferably 0.8 g/cm³ or less, and particularly preferably 0.7 g/cm³ or less.

The upper and lower limit values of the loose bulk density can be arbitrarily combined.

For example, the loose bulk density is preferably 0.41 g/cm³ or more and 0.88 g/cm³ or less, more preferably 0.45 g/cm³ or more and 0.85 g/cm³ or less, and further preferably 0.5 g/cm³ or more and 0.7 g/cm³ or less.

The lithium-containing precursor of a positive electrode material disclosed in the present application has relatively large loose bulk density and tapped bulk density. When sintering into the positive electrode material, the unit saggar loading amount is increased, thereby increasing the production output when sintering into the positive electrode material and reducing the manufacturing cost of the positive electrode material.

### [Determination of Tapped bulk density]

Fill a 25 mL measuring cylinder with 23-25 mL of the lithium-containing precursor sample, weigh the mass of the sample, vibrate at a frequency of 250 times/minute with an amplitude of 3 mm. After 3000 vibrations, read the volume of the sample and calculate the tapped bulk density.

### [Determination of Loose bulk density]

Using the Scott volumeter method, allow the lithium-containing precursor powder to fill a cylindrical cup with a volume of 25 cm³ through a series of inclined baffles in the Scott volumeter, weigh the mass of the lithium-containing precursor sample, and calculate the ratio of mass to volume, which is the loose bulk density.

In one embodiment, the value of D90/D10 obtained from the particle size distribution measurement value of the lithium-containing precursor of a positive electrode material is 4 or more and 12 or less.

In this embodiment, the ratio (D90/D10) of the 90% cumulative volume particle size D90 to the 10% cumulative volume particle size D10 of the lithium-containing precursor is 4.0 or more. In this embodiment, D90/D10 is preferably 4.1 or more, more preferably 4.5 or more, and particularly preferably 5 or more. The upper limit of D90/D10 is not particularly limited. As an example, it can be 12 or less, preferably 8 or less.

The upper and lower limit values of D90/D10 can be arbitrarily combined. For example, D90/D10 is 4.0 to 12.0, preferably 4.0 to 10.0, more preferably 4.5 to 9.0, and particularly preferably 5.0 to 8.0.

### [Cumulative Volume Particle Size Determination by Laser Diffraction Scattering Method]

Use a laser particle size analyzer for testing (manufacturer: Malvern, model: mastersizer 3000). Add a small amount of sample to 20 mL of a 10% sodium hexametaphosphate solution, subject to external ultrasonication for 2-5 min, add to the particle size testing instrument for testing to obtain the cumulative volume particle size distribution curve.

Then, in the obtained cumulative particle size distribution curve, the particle size value when the cumulative volume is 10% observed from the fine particle side is the 10% cumulative volume particle size D10 (µm), the particle size value when the cumulative volume is 90% observed from the fine particle side is the 90% cumulative volume particle size D90 (µm), and the particle size value when the cumulative volume is 50% observed from the fine particle side is the 50% cumulative volume particle size D50 (µm).

In some embodiments, D90 is 5-38 µm, and D10 is 0.5-7.6 µm.

Wherein, the 90% cumulative volume particle size D90 of the lithium-containing precursor is preferably 5-38 µm, more preferably 5.5-35 µm, and further preferably 6-30 µm. When the 90% cumulative volume particle size D90 of the lithium-containing precursor is within the range of 5-38 µm, even with repeated charge/discharge cycles of the lithium secondary battery, the positive electrode material prepared from the lithium-containing precursor is less prone to cracking at interparticle grain boundaries accompanying the intercalation and deintercalation reactions of lithium ions, thus improving the cycle retention rate of the lithium secondary battery.

For example, D90 can be selected as 5 µm, 6 µm, 7 µm, 8 µm, 9 µm, 10 µm, 11 µm, 12 µm, 13 µm, 14 µm, 15 µm, 16 µm, 17 µm, 18 µm, 19 µm, 20 µm, 21 µm, 22 µm, 23 µm, 24 µm, 25 µm, 26 µm, 27 µm, 28 µm, 29 µm, 30 µm, 31 µm, 32 µm, 33 µm, 34 µm, 35 µm, 36 µm, 37 µm, 38 µm.

D10 can be selected as 0.5 µm, 0.6 µm, 0.7 µm, 0.8 µm, 0.9 µm, 1.0 µm, 1 µm, 2 µm, 3 µm, 4 µm, 5 µm, 6 µm, 7 µm, 7.5 µm.

Wherein, the 10% cumulative volume particle size D10 of the lithium-containing precursor is preferably 0.5-7.6 µm, more preferably 0.6-7.4 µm, and further preferably 0.7-6.8 µm. When the 10% cumulative volume particle size D10 of the lithium-containing precursor is within the range of 0.5-7.6 µm, even with repeated charge/discharge cycles of the lithium secondary battery, the positive electrode material prepared from the lithium-containing precursor is less prone to cracking at interparticle grain boundaries accompanying the intercalation and deintercalation reactions of lithium ions, thus improving the cycle retention rate of the lithium secondary battery.

In some embodiments, the value of D90/D50 obtained from the particle size distribution measurement value of the lithium-containing precursor of a positive electrode material is 1.5 to 5.

In this embodiment, the ratio (D90/D50) of the 90% cumulative volume particle size D90 to the 50% cumulative volume particle size D50 of the lithium-containing precursor is 1.5 or more. In this embodiment, D90/D50 is preferably 1.6 or more, more preferably 2 or more, and particularly preferably 2.1 or more. The upper limit of D90/D50 is not particularly limited. As an example, it can be 5 or less, preferably 4.5 or less.

The upper and lower limit values of D90/D50 can be arbitrarily combined. For example, D90/D50 is 1.5 to 5.0, preferably 1.6 to 4.8, more preferably 2 to 4.5, and particularly preferably 2.1 to 4.0.

After preparing the lithium-containing precursor with a D90/D50 value within the specified range above into the positive electrode material, irreversible reactions are easily suppressed, improving the cycle retention rate of the lithium secondary battery.

Wherein, the 50% cumulative volume particle size D50 of the lithium-containing precursor is preferably 1.0-12 µm, more preferably 1.2-11 µm, and further preferably 1.5-10 µm. When the 10% cumulative volume particle size D50 of the lithium-containing precursor is within the range of 1.0-12 µm, even with repeated charge/discharge cycles of the lithium secondary battery, the positive electrode material prepared from the lithium-containing precursor is less prone to cracking at interparticle grain boundaries accompanying the intercalation and deintercalation reactions of lithium ions. As a result, the cycle retention rate of the lithium secondary battery can be improved.

For example, D50 can be selected as 1 µm, 1.2 µm, 1.5 µm, 2 µm, 3 µm, 4 µm, 5 µm, 6 µm, 7 µm, 8 µm, 9 µm, 10 µm, 11 µm, 12 µm.

In some embodiments, the ratio of the specific surface area to D50 of the lithium-containing precursor of a positive electrode material is 3×10⁶ to 15×10⁶ m/g.

In the lithium-containing precursor of this embodiment, the specific surface area is S, and the ratio of the specific surface area to the 50% cumulative volume particle size D50 is S/D50. S/D50 is 3×10⁶ to 15×10⁶ m/g, preferably 3.5×10⁶ to 12×10⁶ m/g, more preferably 3.8×10⁶ to 10×10⁶ m/g, further preferably 4.0×10⁶ to 8×10⁶ m/g, and particularly preferably 5.0×10⁶ m/g or more and less than 7.8×10⁶ m/g. If S/D50 is 3×10⁶ m/g or more, it can be said that the lithium-containing precursor is not excessively crystallized. If S/D50 is 15×10⁶ m/g or less, the primary particles contained in the lithium-containing precursor are agglomerated with an appropriate density.

If a lithium-containing precursor with S/D50 of 3×10⁶ to 15×10⁶ m/g is used to manufacture the positive electrode material, a positive electrode material with a large area involved in lithium ion deintercalation and intercalation and high discharge rate characteristics for the lithium secondary battery can be obtained.

For example, S/D50 can be selected as 3×10⁶ m/g, 4×10⁶ m/g, 5×10⁶ m/g, 6×10⁶ m/g, 7×10⁶ m/g, 8×10⁶ m/g, 9×10⁶ m/g, 10×10⁶ m/g, 11×10⁶ m/g, 12×10⁶ m/g, 13×10⁶ m/g, 14×10⁶ m/g, 15×10⁶ m/g.

In some embodiments, the BET specific surface area of the lithium-containing precursor of a positive electrode material is 2 to 20 m²/g. The upper and lower limit values of the BET specific surface area can be arbitrarily combined.

In the lithium-containing precursor of this embodiment, the BET specific surface area of the lithium-containing precursor is preferably 2 to 20 m²/g, more preferably 3 to 18 m²/g, and further preferably 4 to 15 m²/g. If the BET specific surface area of the precursor is 2 to 20 m²/g, the primary particles contained in the lithium-containing precursor are agglomerated with an appropriate density. Therefore, if such a lithium-containing precursor is used to manufacture the positive electrode material, a positive electrode material with high discharge rate characteristics for the lithium secondary battery can be obtained.

For example, the BET specific surface area of the lithium-containing precursor of a positive electrode material is 2 m²/g, 3 m²/g, 4 m²/g, 5 m²/g, 6 m²/g, 7 m²/g, 8 m²/g, 9 m²/g, 10 m²/g, 11 m²/g, 12 m²/g, 13 m²/g, 14 m²/g, 15 m²/g, 16 m²/g, 17 m²/g, 18 m²/g, 19 m²/g, 20 m²/g.

### [Determination of Specific Surface Area]

Heat 2.5 g of the lithium-containing precursor sample under vacuum at 200°C for 1 h, then test using a BET specific surface area tester. Instrument manufacturer: Micromeritics (USA), instrument model: tristar II 3030.

In some embodiments, the calcium ion content in the lithium-containing precursor of a positive electrode material is 500 ppm or below.

In the lithium-containing precursor of this embodiment, the calcium ion content in the lithium-containing precursor is preferably 400 ppm or below/g, and further preferably 300 ppm or below. Generally, there is no specific lower limit for the calcium ion content in the lithium-containing precursor. Considering the production cost of impurity removal, the calcium ion content in the lithium-containing precursor may be 20 ppm or more. More preferably, the calcium ion content in the lithium-containing precursor is 100 ppm or more.

The upper and lower limit values of the calcium ion content in the lithium-containing precursor can be arbitrarily combined. For example, the calcium ion content in the lithium-containing precursor is 20 ppm or more and 480 ppm or less, preferably 50 ppm or more and 400 ppm or less, and more preferably 100 ppm or more and 300 ppm or less. Compared to precursors in the prior art, the impurity calcium content in the examples of the present application may be higher. However, calcium generally has little impact on product performance. To remove this impurity would require an additional purification step or even the introduction of new additives, undoubtedly increasing costs. After preparing the lithium-containing precursor with a calcium ion content within the specified range above into the positive electrode material, high discharge rate characteristics of the lithium secondary battery can be maintained while also reducing costs.

In some embodiments, the magnesium ion content in the lithium-containing precursor of a positive electrode material is 500 ppm or below.

In the lithium-containing precursor of this embodiment, the magnesium ion content in the lithium-containing precursor is preferably 400 ppm or below/g, and further preferably 300 ppm or below. Generally, there is no specific lower limit for the magnesium ion content in the lithium-containing precursor. Considering the production cost of impurity removal, the magnesium ion content in the lithium-containing precursor may be 20 ppm or more. More preferably, the magnesium ion content in the lithium-containing precursor is 100 ppm or more.

The upper and lower limit values of the magnesium ion content in the lithium-containing precursor can be arbitrarily combined. For example, the magnesium ion content in the lithium-containing precursor is 20 ppm or more and 480 ppm or less, preferably 50 ppm or more and 400 ppm or less, and more preferably 100 ppm or more and 300 ppm or less. Compared to precursors in the prior art, our impurity magnesium content may be higher. To remove this impurity would require an additional purification step or even the introduction of new additives, undoubtedly increasing costs. After preparing the lithium-containing precursor with a magnesium ion content within the specified range above into the positive electrode material, high discharge rate characteristics of the lithium secondary battery can be maintained while also reducing costs.

In some embodiments, the sulfate radical content in the lithium-containing precursor of a positive electrode material is 50 ppm or below.

In the lithium-containing precursor of this embodiment, the sulfate radical content in the lithium-containing precursor is 50 ppm or below, and further preferably 45 ppm or below. Generally, there is no specific lower limit for the sulfate radical content in the lithium-containing precursor. Considering the production cost of impurity removal, the sulfate radical content in the lithium-containing precursor may be 5 ppm or more.

The upper and lower limit values of the sulfate radical content in the lithium-containing precursor can be arbitrarily combined. For example, the sulfate radical content in the lithium-containing precursor is 1 ppm or more and 48 ppm or less, preferably 2 ppm or more and 45 ppm or less, and more preferably 5 ppm or more and 40 ppm or less.

Currently, ternary precursors mainly use sulfates as the main metal raw materials. The co-precipitation method is employed: preparing a salt solution by mixing nickel salt, cobalt salt, and manganese salt in a certain ratio, forming a metal hydroxide system or metal carbonate system precursor under the action of a precipitant and a complexing agent, and then obtaining a qualified product through washing, filtration, drying, and other processes. During the co-precipitation reaction, sulfate radicals mainly exist in the mother liquor in the form of sodium sulfate. A large amount of sulfate radicals adsorbs on the surface or inside of the crystals. Reducing sulfur content requires washing with pure water. The sulfate radicals remaining inside the crystals become impurities in the positive electrode material, affecting the capacity and cycle performance of the positive electrode material, leading to a decline in the overall battery performance. The lithium-containing precursor of the present application has extremely low sulfate radical impurities, which will not affect the capacity and cycle performance of the positive electrode material, thereby enhancing the overall battery performance.

In some embodiments, the sodium ion content in the lithium-containing precursor of a positive electrode material is 50 ppm or below.

In the lithium-containing precursor of this embodiment, the sodium ion content in the lithium-containing precursor is 50 ppm or below, further preferably 45 ppm or below, further preferably 30 ppm or below, and even more preferably 10 ppm or below.

The lithium-containing precursor of the present application has extremely low sodium ion impurities, preventing sodium ions from affecting the capacity and cycle performance of the positive electrode material, thereby enhancing the overall battery performance.

In some embodiments, the respective contents of chloride radical, phosphate radical, and oxalate radical in the lithium-containing precursor of a positive electrode material are each 100 ppm or below.

In the lithium-containing precursor of this embodiment, the respective contents of chloride radical, phosphate radical, and oxalate radical in the lithium-containing precursor are each 100 ppm or below, further preferably 80 ppm or below, further preferably 60 ppm or below, and even more preferably 50 ppm or below.

The lithium-containing precursor of the present application has extremely low chloride radical, phosphate radical, and oxalate radical contents, preventing these impurity ions from affecting the capacity and cycle performance of the positive electrode material, thereby enhancing the overall battery performance.

### [Metal Ion Content Determination]

Test using Thermo Fisher ICP-OES (instrument manufacturer: Thermo Fisher, model: ICAP PRO).

Impurity test: Add a small amount of lithium-containing precursor sample to a 100 mL beaker, add 6 mL of hydrochloric acid and 2 mL of nitric acid, digest, cool, then suction filter (if necessary), make up to volume in a 100 mL volumetric flask, and test the metal ion content in the lithium-containing precursor.

### [Chloride Ion Content Determination]

Weigh 1 g of lithium-containing precursor sample, wet the sample with water, then add concentrated nitric acid and hydrogen peroxide. Dissolve the sample under stirring and heating to boiling, Cl⁻ in the sample reacts with H⁺ to generate volatile HCl. Using a sealed container and connecting pipe, absorb the volatilized HCl with ultrapure water, and test the Cl⁻ content in the absorbed ultrapure water using a potentiometric titrator (silver nitrate standard titration solution).

### [Carbon or Sulfur Component Determination]

Test carbon or sulfur using a Wanlianda CS-901B high-frequency infrared carbon-sulfur analyzer (instrument manufacturer: Wanlianda, model: CS-901B6).

Impurity test: Burn the ceramic crucible at 900°C for 4 h, then cool to room temperature. First, test 3 sets of standard samples for calibration. Then weigh 0.4±0.01 g of iron flux in the crucible, zero the balance, continue to weigh a certain amount of lithium-containing precursor sample, add a spoonful of tungsten granules, place the lithium-containing precursor sample on the machine, click analyze, and output the data.

In some embodiments, the crystal structure of the lithium-containing precursor of a positive electrode material is a layered structure.

After forming the positive electrode material using the lithium-containing precursor of the present application, the hexagonal layered structure is a two-dimensional structure, which facilitates the deintercalation/intercalation of lithium ions, thereby improving the specific capacity of the positive electrode material.

In some embodiments, the crystal form of the lithium-containing precursor of a positive electrode material is one or more of spinel type, cubic type, and octahedral type.

The cubic type structure is beneficial for improving the uniformity of the lithium-containing precursor material, reducing agglomeration, resulting in good product stability and higher cycle performance and rate performance. The octahedral type structure of the lithium-containing precursor has a higher active specific surface area, also facilitating lithium ion deintercalation/intercalation. Moreover, the precursor particle size uniformity is high, which is beneficial for improving the compactness, flatness, and uniformity of the positive electrode sheet coating, thereby improving the cycle stability of the battery. The spinel type is a three-dimensional cubic structure, with high inherent structural stability of the crystal itself, beneficial for improving the cycle stability and rate performance of the positive electrode material.

In some embodiments, the initial discharge capacity at 0.1C of the lithium-containing precursor of a positive electrode material at a charge/discharge voltage of 3.0 to 4.4V is 130 mAh/g or below.

Compared with traditional precursors, the lithium-containing precursor in the embodiments of the present application already contains lithium. Therefore, lithium can be deintercalated/intercalated for charge/discharge. Thus, the lithium-containing precursor of the present application has higher initial efficiency than traditional precursors. However, because the crystal structure of the lithium-containing precursor in the embodiments of the present application is not yet fully grown, the initial efficiency of the lithium-containing precursor in the embodiments of the present application is lower than that of the positive electrode material and cannot be directly used as the positive electrode material for lithium secondary batteries.

In the lithium-containing precursor of this embodiment, the initial discharge capacity at 0.1C of the lithium-containing precursor at a charge/discharge voltage of 3.0 to 4.4V is 130 mAh/g or below. It is further preferred that the initial discharge capacity at 0.1C of the lithium-containing precursor at a charge/discharge voltage of 3.0 to 4.4V is 120 mAh/g or below. It is even more preferred that the initial discharge capacity at 0.1C of the lithium-containing precursor at a charge/discharge voltage of 3.0 to 4.4V is 100 mAh/g or below. Further, the initial discharge capacity at 0.1C of the lithium-containing precursor at a charge/discharge voltage of 3.0 to 4.4V is 70 mAh/g or below. The initial discharge capacity at 0.1C of the lithium-containing precursor at a charge/discharge voltage of 3.0 to 4.4V is 10 mAh/g or more; further, the initial discharge capacity at 0.1C of the lithium-containing precursor at a charge/discharge voltage of 3.0 to 4.4V is 20 mAh/g or more.

The upper and lower limit values of the initial discharge capacity at 0.1C of the lithium-containing precursor at a charge/discharge voltage of 3.0 to 4.4V can be arbitrarily combined. For example, the initial discharge capacity at 0.1C of the lithium-containing precursor at a charge/discharge voltage of 3.0 to 4.4V is 120 mAh/g or below and 5 mAh/g or above; the initial discharge capacity at 0.1C of the lithium-containing precursor at a charge/discharge voltage of 3.0 to 4.4V is 110 mAh/g or below and 10 mAh/g or above; the initial discharge capacity at 0.1C of the lithium-containing precursor at a charge/discharge voltage of 3.0 to 4.4V is 68 mAh/g or below and 20 mAh/g or above.

After preparing the lithium-containing precursor, whose initial discharge capacity at 0.1C at a charge/discharge voltage of 3.0 to 4.4V is within the specified range above in the embodiments of the present application, into the positive electrode material, the initial discharge capacity at 0.1C at a charge/discharge voltage of 3.0 to 4.4V can be significantly improved, resulting in good discharge rate characteristics of the lithium secondary battery while also reducing costs.

### <Button-type battery Testing>

### [Charge/Discharge Test]

Use the aforementioned lithium-containing precursor to fabricate a half-cell. After initial charge/discharge, conduct a discharge rate test and a cycle test to evaluate discharge rate characteristics and cycle characteristics.

The battery ambient temperature is controlled at 25.0°C ± 0.2°C. The test steps for the initial charge/discharge and initial efficiency at 4.4V, 0.1C are divided into 4 steps:
1. Let the prepared half-cell stand; end condition: time ≥ 12 h;
2. Charge at 0.1C rate; end condition: voltage ≥ 4.4 V;
3. Constant voltage charge; end condition: current ≤ 50 µA;
4. Discharge at 0.1C rate; end condition: voltage ≤ 3 V.

Initial efficiency = initial discharge capacity (mAh/g) ÷ initial charge capacity (mAh/g) × 100.

### [Cycle Retention Rate Determination Method]

### [Cycle Test]

Using a coin-type battery, under the following cycle test conditions:
Test temperature: 25°C. Charge/discharge steps are as follows:
1. Stand; end condition: time ≥ 12 h;
2. Charge at 0.1C rate; end condition: voltage ≥ 4.4 V;
3. Constant voltage charge; end condition: current ≤ 50 µA;
4. Discharge at 0.1C rate; end condition: voltage ≤ 3 V.

Steps 1 to 4 constitute one cycle. Repeat charge/discharge from step 2 to 4 for 49 more times, totaling 50 cycles. Life evaluation is performed through the 50-cycle test, and the discharge capacity retention rate after 50 cycles is calculated by the following formula. It should be noted that a higher discharge capacity retention rate after 50 cycles indicates better high-voltage cycle characteristics.

Discharge capacity retention rate after 50 cycles (%) = discharge capacity at the 50th cycle / discharge capacity at the 1st cycle × 100. The discharge capacity retention rate after 50 cycles is sometimes referred to as "cycle retention rate" herein.

The lithium-containing precursor of a positive electrode material disclosed in the present application is an oxide lithium-containing precursor. When sintering the lithium-containing precursor into a positive electrode material, no wastewater will be generated because there are no hydroxide groups. The lithium-containing precursor exists in the form of an oxide. Compared with traditional hydroxide precursors, the oxide precursor has a higher content of the main metals nickel, cobalt, and manganese while the precursor also contains lithium. When sintering into the positive electrode material, it reduces the lithium loss rate during sintering of the positive electrode material, increases the finished product yield under the same saggar loading amount, thereby increasing the production output when sintering into the positive electrode material, reducing the manufacturing cost of the positive electrode material, and greatly increasing production capacity of production lines.

A second aspect of the present disclosure provides a method for preparing a lithium-containing precursor material of a positive electrode material. According to the stoichiometric ratio of metal elements in the chemical general formula Liₓ(NiₓCo_{y}Mn_{1-x-y})O₍₁₊ₐ₎, a lithium nitrate solution, a nickel nitrate solution, a cobalt nitrate solution, and a manganese nitrate solution are mixed, and then the concentration of lithium salt, nickel salt, cobalt salt, and manganese salt in the mixed solution is adjusted through a concentration process. An atomization roasting treatment is performed on the mixed solution. While the mixed solution is atomized into fine droplets, the atomized droplets are directly roasted, causing metal cations such as lithium, nickel, cobalt, and manganese in the droplets to react rapidly in a high-temperature environment to form an oxide lithium-containing precursor, whereas anions in the salt solution are converted into gaseous substances, such as nitrogen oxides, for removal or recovery, thereby obtaining a positive electrode precursor material with high product purity, small particle size, and good uniformity. This preparation method features a simple process flow, few intermediate steps, and a reaction process that is easy to flexibly control. Performing roasting simultaneously with atomization not only ensures a smaller particle size for the product but also results in a fast reaction rate. The actual reaction time to obtain the lithium-containing positive electrode material precursor via atomization roasting is only a few seconds, leading to high production efficiency. Furthermore, since the anions in the salt solution are converted into gaseous substances for removal or recovery in the high-temperature environment, the raw material utilization rate is high, the impurity content in the product is low, and the performance is excellent.

The method of the present disclosure for directly preparing the positive electrode precursor material through atomization roasting treatment of the mixed solution is beneficial for improving the structural stability of the precursor material, increasing the density of the precursor material, and refining the material particle size, thereby further increasing the unit saggar loading amount of the precursor material, improving the preparation efficiency of the positive electrode material, and reducing manufacturing costs. Compared with traditional methods for preparing ternary hydroxide precursors, such as the co-precipitation method, this method not only improves material preparation efficiency, simplifies the process, reduces the emission of industrial wastes such as wastewater, making the production process more environmentally friendly and lowering production costs, but also is more conducive to controlling the crystal structure, particle size, loose bulk density, tapped bulk density, and other properties of the precursor material, and overcomes issues such as poor structural stability, low density, and poor particle size controllability present in existing secondary-crystallization-coated ternary hydroxide precursor materials.

In some embodiments, nitrate salt solutions containing lithium, nickel, cobalt, and manganese are transferred to a mixing tank for mixing to prepare a mixed solution containing lithium, nickel, cobalt, and manganese ions, wherein the material of the mixing tank is an acid-resistant material with a certain strength.

In some embodiments, after mixing the lithium salt solution, nickel salt solution, cobalt salt solution, and manganese salt solution, a concentration process is performed to control the total concentration of lithium salt, nickel salt, cobalt salt, and manganese salt in the obtained mixed solution to be 50-300 g/L. Such a metal salt concentration is conducive to atomization crystallization and granulation. If the total concentration of metal salts in the mixed solution is below 50 g/L, it will result in too low a metal salt content in the droplets after atomization, which is not conducive to the full reaction and crystallization, granulation of the metal salts in the droplets during the roasting process, and the obtained product amount is low, which is not conducive to the enrichment of the precursor. If the total concentration of metal salts in the mixed solution is above 300 g/L, the metal salt content in the droplets after atomization is too high, which is not conducive to the crystallization/granulation of the metal salt components during the roasting process, and the particle size becomes too large, which is not conducive to obtaining single-crystal materials nor to controlling the crystal form of the material, thereby reducing the stability of the positive electrode precursor. In some specific embodiments, the total concentration of lithium salt, nickel salt, cobalt salt, and manganese salt in the mixed solution is 50 g/L, 60 g/L, 80 g/L, 120 g/L, 160 g/L, 200 g/L, 220 g/L, 260 g/L, 300 g/L, and the like.

In some embodiments, the step of performing the atomization roasting treatment on the mixed solution comprises: conducting spray pyrolysis in a spray dryer, wherein the air-to-gas ratio (air to natural gas flow ratio) of the roasting furnace burner is ≤ 10, for example, 8.5:1 to 10:1; atomization parameters: compressed air pressure ≥ 0.2 MPa, for example, 0.2-0.5 MPa; the volume ratio of compressed air to liquid flow is 50-300:1; and the pyrolysis temperature is controlled at 400-1000°C, for example, 400, 450, 500, 550, 600, 650, 700, 750, 800, 850, 900, 950, 1000°C. In some embodiments, the pyrolysis temperature is controlled at 500-680°C. A lower pyrolysis temperature results in a higher lithium carbonate content in the precursor. A higher pyrolysis temperature leads to higher energy consumption. The nitrate solution is atomized in the spray dryer to form mist droplets. The mist droplets rapidly lose moisture under the action of hot air, the nitrates undergo pyrolysis and convert into oxides, and the nanoparticles in the mist droplets agglomerate to form large agglomerates. The agglomerates are the precursor powder. During the spray pyrolysis process, the agglomeration of nano-sized primary particles into micron-sized agglomerates is beneficial for increasing the compacted density of the lithium nickel cobalt manganese oxide positive electrode material made after calcination, thereby increasing the volumetric energy density of said lithium nickel cobalt manganese oxide positive electrode material as a lithium-ion battery electrode material. By adjusting the burner air-to-gas ratio, compressed air pressure, and volume ratio of compressed air to liquid flow during the atomization roasting treatment, the particle size, crystal form, and other physical characteristics of the prepared positive electrode precursor material can be flexibly controlled, thereby facilitating the optimization of the physicochemical properties of the positive electrode material.

In some embodiments, the roasting treatment time is controlled to be 1-50 seconds. In this process, the formed lithium-containing precursor can be ensured to be prepared within a short time. The preparation time is short and the efficiency is relatively high, which is conducive to widespread application.

In some embodiments, after obtaining the lithium-containing precursor material, post-treatment steps such as grinding or crushing treatment of the lithium-containing precursor material are further included. By controlling conditions such as the grinding disc spacing or the pressure/flow of the crushing gas, the particle size of the resulting product can be controlled, making the particle size distribution of the positive electrode precursor material more uniform.

A third aspect of the present disclosure provides a positive electrode material Li(NiₓCo_{y}Mn_{1-x-y})O₁₊ₐ. The positive electrode material is obtained by sintering the aforementioned lithium-containing precursor of the positive electrode material, or by sintering a mixture of the lithium-containing precursor and a supplemental lithium source (supplementing a small amount of lithium source based on the deficiency of lithium content in the lithium-containing precursor relative to the positive electrode material). The lithium source may be selected from one or more of lithium carbonate, lithium hydroxide monohydrate, lithium acetate, lithium nitrate, lithium oxalate, lithium acetate, lithium hydroxide, and lithium oxide. For example, the lithium source is selected from lithium carbonate or lithium hydroxide monohydrate.

In some preferred embodiments, the positive electrode material is obtained directly by sintering the lithium-containing precursor material of the positive electrode material without mixing the precursor material with a lithium source.

Sintering can be performed under a pure oxygen or air atmosphere, the number of sintering times is 1-3, and the sintering temperature is 400-1050°C. For example, the lithium-containing precursor of a positive electrode material is held at a first temperature of 400°C-800°C for 1-5 hours, then heated to a second temperature of 800°C-1050°C, and held at the second temperature for 5-10 hours. Then, naturally cool to room temperature. The sintered product is sieved through a 300-mesh sieve to obtain the lithium nickel cobalt manganese oxide positive electrode material.

For example, the positive electrode material provided by the third aspect of the present disclosure may be selected from NCM333, NCM523, NCM613, NCM622, and NCM811. Preferably, the positive electrode material is a high-nickel positive electrode material, including but not limited to: LiNi_{0.72}Co_{0.03}Mn_{0.25}O₂, LiNi_{0.7}Co_{0.04}Mn_{0.26}O₂, LiNi_{0.67}Co_{0.05}Mn_{0.28}O₂, LiNi_{0.65}Co_{0.06}Mn_{0.29}O₂, LiNi_{0.62}Co_{0.08}Mn_{0.30}O₂, LiNi_{0.6}Co_{0.10}Mn_{0.30}O₂, and the like. These positive electrode materials simultaneously have good structural stability, high reversible capacity, good cycle stability, and other characteristics.

Since the positive electrode material is prepared from the aforementioned lithium-containing precursor, the positive electrode material also inherits the technical effects of the lithium-containing precursor. When preparing a positive electrode material from a hydroxide precursor, the positive electrode hydroxide precursor usually needs to be solid-mixed with a lithium source and then subjected to high-temperature sintering. However, due to uneven mixing between solids and the slow diffusion rate of lithium in the solid phase, it may be difficult to achieve uniform lithium distribution. Non-uniform lithium distribution will severely affect the electrochemical performance of the positive electrode material. Whereas when preparing the positive electrode material from the lithium-containing precursor of the present application, since the lithium-containing precursor itself contains lithium, during positive electrode material preparation, only a small amount of lithium source needs to be supplemented or no lithium source needs to be supplemented to directly sinter into the positive electrode material, making the lithium distribution more uniform and improving the electrochemical performance of the positive electrode material. On another aspect, by directly pre-burning lithium into the precursor, the subsequent step of mixing the precursor with the lithium source is reduced, simplifying the positive electrode material production process. Compared with the traditional process of sintering the precursor with lithium carbonate, it reduces the decomposition of lithium carbonate into carbon dioxide, lowering carbon emissions. Because lithium is directly pre-burned into the precursor, the sintering temperature for the lithium-containing precursor of the present application to form the positive electrode material is lower than that for the traditional precursor under the same conditions, thus reducing sintering costs. On still another aspect, since precursor suppliers and lithium source suppliers are usually independent, it is challenging to some extent for downstream positive electrode material manufacturers to strictly control the product quality and batch stability of both precursor and lithium source suppliers, which is not conducive to the stability of positive electrode material preparation. The lithium-containing precursor of the present application itself contains lithium, thus, to some extent, solving the raw material supply problem for positive electrode material producers and improving the stability of positive electrode material preparation.

A fifth aspect of the present application provides a lithium secondary battery, wherein a positive electrode sheet of the lithium secondary battery comprises the aforementioned positive electrode material.

The lithium secondary battery provided by the fifth aspect of the present application, because the positive electrode sheet comprises the aforementioned positive electrode material which has high specific capacity, cycle stability, structural stability, and other characteristics, thus improves the energy density, cycle stability, and safety performance of the secondary battery.

In some embodiments, the positive electrode sheet in the lithium secondary battery includes a current collector and an active material layer, which are set laminated and attached. The active material layer includes the ternary material, a conductive agent, a binder, and the like.

In some embodiments, the process for preparing the positive electrode sheet from the positive electrode material is as follows: mix the positive electrode material, conductive agent, and binder to obtain an electrode slurry, coat the electrode slurry onto the current collector, and then perform drying, rolling, die-cutting, and other steps to prepare the positive electrode sheet.

In some embodiments, the positive electrode current collector includes, but is not limited to, copper foil, aluminum foil, or any one thereof.

In some embodiments, the binder content in the electrode slurry is 2 wt% - 4 wt%. The binder may include one or more of polyvinylidene fluoride, soluble polytetrafluoroethylene, styrene-butadiene rubber, hydroxypropyl methylcellulose, methyl cellulose, carboxymethyl cellulose, polyvinyl alcohol, acrylonitrile copolymer, sodium alginate, chitosan, and chitosan derivatives. In some embodiments, the conductive agent content in the electrode slurry is 3 wt% - 5 wt%. The conductive agent may include one or more of graphite, carbon black, acetylene black, graphene, carbon fiber, C60, and carbon nanotubes.

The present disclosure does not specifically limit the anode sheet, electrolyte, separator, and the like., in the lithium secondary battery, which can be applicable to conventional lithium-ion battery systems.

In order to make the objectives, technical solutions, and advantages of the embodiments of the present invention clearer, the embodiments of the present invention are described clearly and completely below. The described embodiments are exemplary and are only used to explain the present invention and should not be construed as limiting the present invention. Based on the described embodiments of the present invention, all other embodiments obtained by those of ordinary skill in the art without creative work shall fall within the protection scope of the present invention.

The experimental methods used in the following examples, unless otherwise specified, are conventional methods. The materials and reagents used in the following examples, unless otherwise specified, are all commercially available.

### Example 1

### Experiment 1.1: Preparation of Lithium-Containing Precursor of Positive electrode Material

Prepare a nitrate solution of nickel, cobalt, manganese, and lithium according to the molar ratio Ni : Mn : Co : Li = 0.60 : 0.10 : 0.30 : 1.05, wherein the total concentration of nickel nitrate, cobalt nitrate, manganese nitrate, and lithium nitrate is 175 g/L;
Introduce the solution into a synthesis tower for spray pyrolysis. The powder is discharged from the bottom, cooled by a cooler, then sieved, subjected to air-jet milling, magnetic separation, and packaged as the finished product. The flue gas is drawn from the top by a fan, passes through a venturi to scrub dust from the gas and cool, then passes through a heat exchanger to reduce the tail gas temperature to below 30 degrees Celsius, then undergoes multi-stage absorption to recover nitric acid, and finally undergoes alkali washing and urea absorption to make the tail gas meet emission standards.
Spray pyrolysis parameters: air-to-gas ratio (air to natural gas flow ratio) of burner: 9:1;
Atomization parameters: compressed air pressure: 0.3 MPa;
Volume ratio of compressed air to liquid flow: 175:1;
The temperature of spray pyrolysis is 550°C, and the roasting treatment time is 10 seconds.

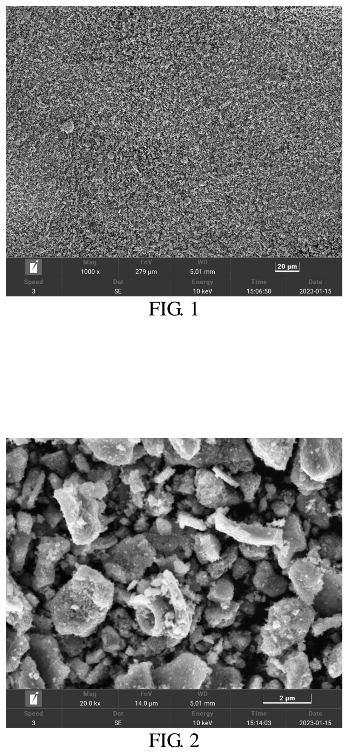

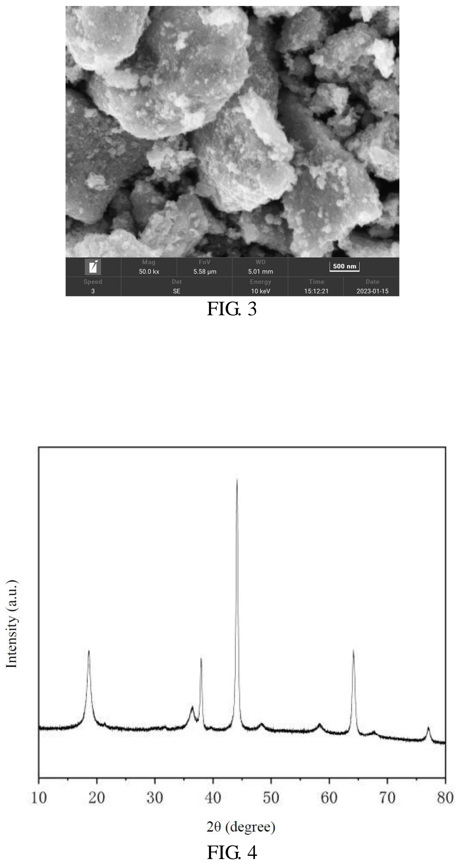

SEM photographs are shown in FIG. 1 to 3, and the XRD pattern is shown in FIG. 4.

The chemical formula of this lithium-containing precursor is Li_{0.60}(Ni_{0.60}Co_{0.10}Mn_{0.30})O_{1.60}(Li₂CO₃)_{0.20}, and the carbon content in the lithium-containing precursor is 2.34 wt%. The lithium-containing precursor of a positive electrode material includes multiple sheet-like agglomerates formed by the agglomeration of primary particles. The primary particle size is 95 nm. The maximum thickness of the agglomerate is 5.3 µm, the maximum length is 18 µm, and the maximum width is 14 µm; in the powder X-ray diffraction pattern using Cu-Kα radiation, the peak intensity at 20 of 18.6±0.3 degrees is Ia, the peak intensity at 2θ of 44.1±0.3 degrees is Ib, and the peak intensity ratio of Iₐ to I_{b} is 0.30. The lithium-containing precursor has a layered structure. The tapped bulk density of the lithium-containing precursor is 1.55 g/cm³, the loose bulk density is 0.51 g/cm³, and the ratio of the tapped bulk density to the loose bulk density is 3. The value of D90/D10 obtained from the particle size distribution measurement value of the lithium-containing precursor is 7. The D50 obtained from the particle size distribution measurement value of the lithium-containing precursor is 3.1 µm. The BET specific surface area is 7.5 m²/g. The magnesium ion content is 380 ppm, the calcium ion content is 350 ppm, and the sulfate radical content in the lithium-containing precursor is 45 ppm.

### Experiment 1.2: Preparation of Positive electrode Material

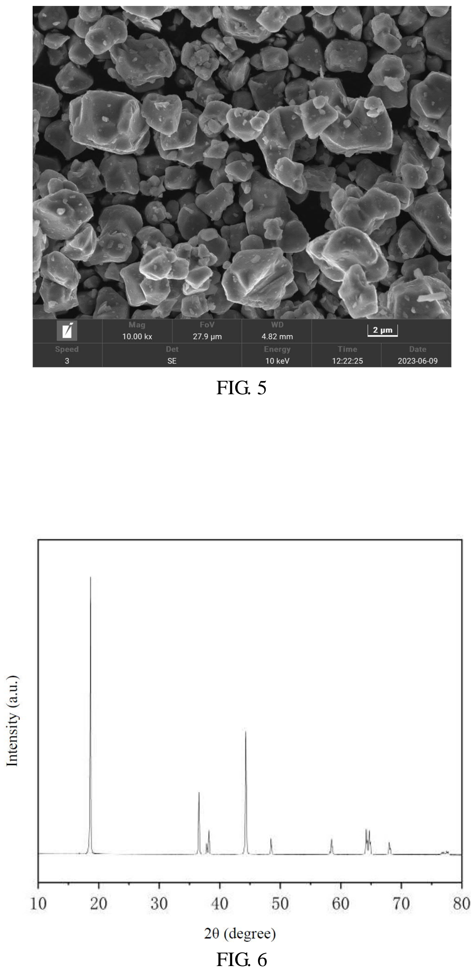

Under a pure oxygen atmosphere, raise the temperature of the lithium-containing precursor of the positive electrode material from Experiment 1.1 to 600°C at a heating rate of 5°C/min and hold for 5 hours, then raise the temperature to 950°C at a heating rate of 5°C/min and hold for 10 hours, and cool naturally. Crush to obtain the LiNi_{0.6}Co_{0.1}Mn_{0.3}O₂ positive electrode material. The SEM photograph of this positive electrode material is shown in FIG. 5, and the XRD pattern is shown in FIG. 6.

### Experiment 1.3: Preparation of Lithium-Ion Battery

The steps for preparing the lithium-ion battery include:
Positive electrode sheet preparation: According to the weight ratio of the lithium-containing precursor from Experiment 1.1 or the positive electrode material from Experiment 1.2 : conductive agent (acetylene black) : binder (PVDF) = 85% : 10% : 5%, weigh and mix by grinding. Then, add N-methyl-2-pyrrolidone (NMP) solvent to prepare a uniform positive electrode slurry. Apply the positive electrode slurry evenly onto aluminum foil using a doctor blade, and dry to obtain a positive electrode sheet ready for direct assembly into a battery.

Battery assembly: In a high-purity argon atmosphere glove box, assemble the prepared positive electrode sheet into a CR2025 button-type battery, assembling it into a button-type battery with lithium as the counter electrode for subsequent electrochemical performance testing. Wherein the separator is a polyolefin porous membrane, and the electrolyte is ethylene carbonate.

The initial discharge capacity at 0.1C of the lithium-containing precursor of a positive electrode material from Experiment 1.1 at a charge/discharge voltage of 3.0 to 4.4V is 67 mAh/g, while the initial discharge capacity at 0.1C of the positive electrode material from Experiment 1.2 at a charge/discharge voltage of 3.0 to 4.4V is 194.5 mAh/g, with an initial coulombic efficiency of 91% and a 50-cycle discharge capacity retention rate of 94.2%.

### Example 2

### Experiment 2.1: Preparation of Lithium-Containing Precursor of Positive electrode Material

Prepare a nitrate solution of nickel, cobalt, manganese, and lithium according to the molar ratio Ni : Mn : Co : Li = 0.60 : 0.10 : 0.30 : 1.05, wherein the total concentration of nickel nitrate, cobalt nitrate, manganese nitrate, and lithium nitrate is 175 g/L;
Introduce the solution into a synthesis tower for spray pyrolysis. The powder is discharged from the bottom, cooled by a cooler, then sieved, subjected to air-jet milling, magnetic separation, and packaged as the finished product. The flue gas is drawn from the top by a fan, passes through a venturi to scrub dust from the gas and cool, then passes through a heat exchanger to reduce the tail gas temperature to below 30 degrees Celsius, then undergoes multi-stage absorption to recover nitric acid, and finally undergoes alkali washing and urea absorption to make the tail gas meet emission standards.

Spray pyrolysis parameters: air-to-gas ratio (air to natural gas flow ratio) of burner: 9:1;
Atomization parameters: compressed air pressure: 0.3 MPa;
Volume ratio of compressed air to liquid flow: 175:1;
The temperature of spray pyrolysis is 600°C, and the roasting treatment time is 10 seconds.

SEM photographs are shown in FIG. 1 to 3, and the XRD pattern is shown in FIG. 4.

The chemical formula of this lithium-containing precursor is Li_{0.72}(Ni_{0.60}Co_{0.10}Mn_{0.30})O_{1.72}(Li₂CO₃)_{0.14}, and the carbon content in the lithium-containing precursor is 1.67 wt%. The lithium-containing precursor of a positive electrode material includes multiple sheet-like agglomerates formed by the agglomeration of primary particles. The primary particle size is 90 nm. The maximum thickness of the agglomerate is 5.8 µm, the maximum length is 16 µm, and the maximum width is 15 µm; in the powder X-ray diffraction pattern using Cu-Kα radiation, the peak intensity at 2θ of 18.6±0.3 degrees is Ia, the peak intensity at 2θ of 44.1±0.3 degrees is Ib, and the peak intensity ratio of Iₐ to I_{b} is 0.35. The lithium-containing precursor has a layered structure. The tapped bulk density of the lithium-containing precursor is 1.59 g/cm³, the loose bulk density is 0.54 g/cm³, and the ratio of the tapped bulk density to the loose bulk density is 3. The value of D90/D10 obtained from the particle size distribution measurement value of the lithium-containing precursor is 6.5. The D50 obtained from the particle size distribution measurement value of the lithium-containing precursor is 2.9 µm. The BET specific surface area is 7.9 m²/g. The magnesium ion content is 370 ppm, the calcium ion content is 390 ppm, and the sulfate radical content in the lithium-containing precursor is 39 ppm.

### Experiment 2.2: Preparation of Positive electrode Material

Under a pure oxygen atmosphere, raise the temperature of the lithium-containing precursor of the positive electrode material from Experiment 2.1 to 600°C at a heating rate of 5°C/min and hold for 5 hours, then raise the temperature to 950°C at a heating rate of 5°C/min and hold for 10 hours, and cool naturally. Crush to obtain the LiNi_{0.6}Co_{0.1}Mn_{0.3}O₂ positive electrode material.

### Experiment 2.3: Preparation of Lithium-Ion Battery

The steps for preparing the lithium-ion battery include:
Positive electrode sheet preparation: According to the weight ratio of the lithium-containing precursor from Experiment 2.1 or the positive electrode material from Experiment 2.2 : conductive agent (acetylene black) : binder (PVDF) = 85% : 10% : 5%, weigh and mix by grinding. Then, add N-methyl-2-pyrrolidone (NMP) solvent to prepare a uniform positive electrode slurry. Apply the positive electrode slurry evenly onto aluminum foil using a doctor blade, and dry to obtain a positive electrode sheet ready for direct assembly into a battery.

Battery assembly: In a high-purity argon atmosphere glove box, assemble the prepared positive electrode sheet into a CR2025 button-type battery, assembling it into a button-type battery with lithium as the counter electrode for subsequent electrochemical performance testing. Wherein the separator is a polyolefin porous membrane, and the electrolyte is ethylene carbonate.

The initial discharge capacity at 0.1C of the lithium-containing precursor of a positive electrode material from Experiment 2.1 at a charge/discharge voltage of 3.0 to 4.4V is 70 mAh/g, while the initial discharge capacity at 0.1C of the positive electrode material from Experiment 2.2 at a charge/discharge voltage of 3.0 to 4.4V is 194.7 mAh/g, with an initial coulombic efficiency of 90.2% and a 50-cycle discharge capacity retention rate of 94.3%.

### Example 3

### Experiment 3.1: Preparation of Lithium-Containing Precursor of Positive electrode Material

Prepare a nitrate solution of nickel, cobalt, manganese, and lithium according to the molar ratio Ni : Mn : Co : Li = 0.60 : 0.10 : 0.30 : 0.83, wherein the total concentration of nickel nitrate, cobalt nitrate, manganese nitrate, and lithium nitrate is 171 g/L.

Introduce the solution into a synthesis tower for spray pyrolysis. The powder is discharged from the bottom, cooled by a cooler, then sieved, subjected to air-jet milling, magnetic separation, and packaged as the finished product. The flue gas is drawn from the top by a fan, passes through a venturi to scrub dust from the gas and cool, then passes through a heat exchanger to reduce the tail gas temperature to below 30 degrees Celsius, then undergoes multi-stage absorption to recover nitric acid, and finally undergoes alkali washing and urea absorption to make the tail gas meet emission standards.

Spray pyrolysis parameters: air-to-gas ratio (air to natural gas flow ratio) of burner: 9:1;
Atomization parameters: compressed air pressure: 0.3 MPa;
Volume ratio of compressed air to liquid flow: 175:1;
The temperature of spray pyrolysis is 600°C, and the roasting treatment time is 10 seconds.

SEM photographs are shown in FIG. 1 to 3, and the XRD pattern is shown in FIG. 4.

The chemical formula of this lithium-containing precursor is Li_{0.72}(Ni_{0.60}Co_{0.10}Mn_{0.30})O_{1.72}(Li₂CO₃)_{0.05}, and the carbon content in the lithium-containing precursor is 0.6 wt%. The lithium-containing precursor of a positive electrode material includes multiple sheet-like agglomerates formed by the agglomeration of primary particles. The primary particle size is 85 nm. The maximum thickness of the agglomerate is 5.5 µm, the maximum length is 16 µm, and the maximum width is 15 µm; in the powder X-ray diffraction pattern using Cu-Kα radiation, the peak intensity at 20 of 18.6±0.3 degrees is Ia, the peak intensity at 2θ of 44.1±0.3 degrees is Ib, and the peak intensity ratio of Iₐ to I_{b} is 0.38. The lithium-containing precursor has a layered structure. The tapped bulk density of the lithium-containing precursor is 1.64 g/cm³, the loose bulk density is 0.55 g/cm³, and the ratio of the tapped bulk density to the loose bulk density is 3. The value of D90/D 10 obtained from the particle size distribution measurement value of the lithium-containing precursor is 6.8. The D50 obtained from the particle size distribution measurement value of the lithium-containing precursor is 2.6 µm. The BET specific surface area is 8.3 m²/g. The magnesium ion content is 390 ppm, the calcium ion content is 370 ppm, and the sulfate radical content in the lithium-containing precursor is 42 ppm.

### Experiment 3.2: Preparation of Positive electrode Material

Under a pure oxygen atmosphere, uniformly mix the lithium-containing precursor of the positive electrode material from Experiment 3.1 with an appropriate amount of lithium carbonate, then raise the temperature to 600°C at a heating rate of 5°C/min and hold for 5 hours, then raise the temperature to 950°C at a heating rate of 5°C/min and hold for 10 hours, and cool naturally. Crush to obtain the LiNi_{0.6}Co_{0.1}Mn_{0.3}O₂ positive electrode material.

### Experiment 3.3: Preparation of Lithium-Ion Battery

The steps for preparing the lithium-ion battery include:
Positive electrode sheet preparation: According to the weight ratio of the lithium-containing precursor from Experiment 3.1 or the positive electrode material from Experiment 3.2 : conductive agent (acetylene black) : binder (PVDF) = 85% : 10% : 5%, weigh and mix by grinding. Then, add N-methyl-2-pyrrolidone (NMP) solvent to prepare a uniform positive electrode slurry. Apply the positive electrode slurry evenly onto aluminum foil using a doctor blade, and dry to obtain a positive electrode sheet ready for direct assembly into a battery.

Battery assembly: In a high-purity argon atmosphere glove box, assemble the prepared positive electrode sheet into a CR2025 button-type battery, assembling it into a button-type battery with lithium as the counter electrode for subsequent electrochemical performance testing. Wherein the separator is a polyolefin porous membrane, and the electrolyte is ethylene carbonate.

The initial discharge capacity at 0.1C of the lithium-containing precursor of a positive electrode material from Experiment 3.1 at a charge/discharge voltage of 3.0 to 4.4V is 69 mAh/g, while the initial discharge capacity at 0.1C of the positive electrode material from Experiment 3.2 at a charge/discharge voltage of 3.0 to 4.4V is 194.5 mAh/g, with an initial coulombic efficiency of 92.3% and a 50-cycle discharge capacity retention rate of 94.5%.

### Comparative Example 1

### Experiment 4.1: Preparation of Positive electrode Material Precursor

A positive electrode material precursor, the preparation of which includes steps:
According to the stoichiometric ratio of metal elements in the chemical formula Ni_{0.60}Co_{0.10}Mn_{0.30}(OH)₂, mix nickel chloride solution, cobalt chloride solution, and manganese chloride solution; then add ammonia water and sodium hydroxide according to an ammonia-nickel molar ratio of 0.5:1 and an alkali-nickel molar ratio of 2:1, control the reaction temperature at 55°C and pH at 12.0. After reaction, separate to obtain the Ni0.60Co0.10Mn0.30(OH)₂ precursor.

The Ni_{0.60}Co_{0.10}Mn_{0.30}(OH)₂ precursor is spherical or nearly spherical. The tapped bulk density of the Ni_{0.60}Co_{0.10}Mn_{0.30}(OH)₂ precursor is 1.83 g/cm³. The D50 obtained from the particle size distribution measurement value of the Ni_{0.60}Co_{0.10}Mn_{0.30}(OH)₂ precursor is 15 µm. The BET specific surface area is 15 m²/g.

### Experiment 4.2: Preparation of Positive electrode Material

Solid-mix the Ni_{0.60}Co_{0.10}Mn_{0.30}(OH)₂ precursor from Experiment 4.1 with lithium carbonate. After solid mixing of the Ni_{0.60}Co_{0.10}Mn_{0.30}(OH)₂ precursor and lithium carbonate, sinter at least twice to obtain the Ni_{0.60}Co_{0.10}Mn_{0.30}(OH)₂ positive electrode material. The difference from Examples 1, 2, and 3 is that the Ni_{0.60}Co_{0.10}Mn_{0.30}(OH)₂ precursor of Comparative Example 1 must be mixed with a lithium source to form the positive electrode material. Secondly, when sintering the lithium-containing precursors of Examples 1, 2, and 3 into the positive electrode material, only one sintering may be required to form the positive electrode material, whereas when sintering the Ni_{0.60}Co_{0.10}Mn_{0.30}(OH)₂ precursor of Comparative Example 1 into the positive electrode material, two or more sintering steps must be required to form the positive electrode material.

### Experiment 4.3: Preparation of Lithium-Ion Battery

The steps for preparing the lithium-ion battery include:
Positive electrode sheet preparation: According to the weight ratio of the Ni0.60Co0.10Mn0.30(OH)₂ precursor from Experiment 4.1 or the positive electrode material from Experiment 4.2 : conductive agent (acetylene black) : binder (PVDF) = 85% : 10% : 5%, weigh and mix by grinding. Then, add N-methyl-2-pyrrolidone (NMP) solvent to prepare a uniform positive electrode slurry. Apply the positive electrode slurry evenly onto aluminum foil using a doctor blade, and dry to obtain a positive electrode sheet ready for direct assembly into a battery.

Battery assembly: In a high-purity argon atmosphere glove box, assemble the prepared positive electrode sheet into a CR2025 button-type battery, assembling it into a button-type battery with lithium as the counter electrode for subsequent electrochemical performance testing. Wherein the separator is a polyolefin porous membrane, and the electrolyte is ethylene carbonate.

The initial discharge capacity at 0.1C of the positive electrode material from Experiment 4.2 at a charge/discharge voltage of 3.0 to 4.4V at a temperature of 25°C is 194.5 mAh/g, with an initial coulombic efficiency of 90.1% and a 50-cycle discharge capacity retention rate of 94.2%.

A comparison of Examples 1, 2, and 3 with Comparative Example 1 shows that the lithium-containing precursor of a positive electrode material disclosed in the present application is an oxide lithium-containing precursor. When sintering the lithium-containing precursor into a positive electrode material, no wastewater will be generated because there are no hydroxide groups. The lithium-containing precursor exists in the form of an oxide. Compared with traditional hydroxide precursors, the oxide precursor has a higher content of the main metals nickel, cobalt, and manganese while the precursor also contains lithium. When sintering into the positive electrode material, it reduces the lithium loss rate during sintering of the positive electrode material, increases the finished product yield under the same saggar loading amount, thereby increasing the production output when sintering into the positive electrode material, reducing the manufacturing cost of the positive electrode material, and greatly increasing production capacity of production lines. In the present application, the lithium-containing precursor is formed through atomization roasting. Compared with the hydroxide precursor prepared by the co-precipitation method, the process flow in the present application is simple, with fewer intermediate steps, and the reaction process is easy to flexibly control. Performing roasting treatment simultaneously with atomization not only ensures the product has a smaller particle size, but also the reaction speed is fast. The actual reaction time to obtain the lithium-containing precursor material via atomization roasting is only a few seconds, resulting in high production efficiency. Additionally, since the anions in the salt solution are converted into gaseous substances (such as nitrogen oxides) for removal or recovery in the high-temperature environment, the raw material utilization rate is high, the impurity content in the product is low, and the performance is excellent. Meanwhile, the lithium-containing precursor material product prepared by this method, where the material itself has more excellent structural stability compared to the traditional co-precipitation method. When preparing a positive electrode material from a hydroxide precursor, the positive electrode hydroxide precursor usually needs to be solid-mixed with a lithium source and then subjected to high-temperature sintering. However, due to uneven mixing between solids and the slow diffusion rate of lithium in the solid phase, it may be difficult to achieve uniform lithium distribution. Non-uniform lithium distribution will severely affect the electrochemical performance of the positive electrode material. When preparing the positive electrode material from the lithium-containing precursor of the present application, since the lithium-containing precursor itself contains lithium, during positive electrode material preparation, only a small amount of lithium source needs to be supplemented or no lithium source needs to be supplemented to directly sinter into the positive electrode material, making the lithium distribution more uniform and improving the electrochemical performance of the positive electrode material. On another aspect, by directly pre-burning lithium into the precursor, the subsequent step of mixing the precursor with the lithium source is reduced, simplifying the positive electrode material production process. Compared with the traditional process of sintering the precursor with lithium carbonate, it reduces the decomposition of lithium carbonate into carbon dioxide, lowering carbon emissions. Because lithium is directly pre-burned into the precursor, the sintering temperature for the lithium-containing precursor of the present application to form the positive electrode material is lower than that for the traditional precursor under the same conditions, thus reducing sintering costs. On still another aspect, since precursor suppliers and lithium source suppliers are usually independent, it is challenging for downstream positive electrode material manufacturers to strictly control the product quality and batch stability of both precursor and lithium source suppliers, which is not conducive to the stability of positive electrode material preparation. The lithium-containing precursor of the present application itself contains lithium, thus, to some extent, solving the raw material supply problem for positive electrode material producers and improving the stability of positive electrode material preparation.

The present invention illustrates the process method of the present invention through the above examples, but the present invention is not limited to the above process steps, that is, it does not mean that the present invention must rely on the above process steps to be implemented. Those skilled in the art should understand that any improvements to the present invention, equivalent replacements of the raw materials selected for the present invention, additions of auxiliary components, selection of specific methods, etc., all fall within the protection and disclosure scope of the present invention.

Where no conflict arises, the embodiments of the present invention and the features in the embodiments can be combined with each other to obtain new embodiments. The protection scope of the present invention is not limited to the above embodiments, and the protection scope of the present invention should be based on the protection scope of the claims.

## Claims

1. A lithium-containing precursor of a positive electrode material, wherein it satisfies the chemical formula Liₐ(NiₓCo_{y}Mn_{1-x-y})O₍₁₊ₐ₎ (Li₂CO₃)_{z}, wherein a is 0.10~1.08; 0 < x < 1, 0 < y < 1, and x + y < 1; z is greater than 0 and less than or equal to 0.354, and the carbon content thereof is greater than 0 and less than or equal to 6.2 wt%.

2. The lithium-containing precursor of a positive electrode material according to claim 1, wherein the carbon content is 0.05 wt%~2.0 wt%.

3. The lithium-containing precursor of a positive electrode material according to claim 1, wherein in the chemical formula Liₐ(NiₓCo_{y}Mn_{1-x-y})O₍₁₊ₐ₎ (Li₂CO₃)_{z}, 0.50 ≤ x ≤ 0.90, 0.01 ≤ y ≤ 0.40.

4. The lithium-containing precursor of a positive electrode material according to claim 3, wherein in the chemical formula Liₐ(NiₓCo_{y}Mn_{1-x-y})O₍₁₊ₐ₎ (Li₂CO₃)_{z}, 0.55 ≤ x ≤ 0.80, 0.05 ≤ y ≤ 0.20, 0.08 ≤ 1-x-y ≤ 0.30.

5. The lithium-containing precursor of a positive electrode material according to claim 1, wherein in the chemical formula Liₐ(NiₓCo_{y}Mn_{1-x-y})O₍₁₊ₐ₎ (Li₂CO₃)_{z}, the value range of a is 0.10 ≤ a ≤ 0.50 or 1 < a ≤ 1.08.

6. The lithium-containing precursor of a positive electrode material according to claim 1, wherein in the chemical formula Liₐ(NiₓCo_{y}Mn_{1-x-y})O₂ (Li₂CO₃)_{z}, 0.05 ≤ z ≤ 0.20.

7. The lithium-containing precursor of a positive electrode material according to claim 1, wherein the lithium-containing precursor of a positive electrode material includes at least one sheet-like agglomerate formed by the agglomeration of primary particles.

8. The lithium-containing precursor of a positive electrode material according to claim 7, wherein the maximum thickness of the sheet-like agglomerate is 0.1~7 µm, the maximum length is 0.1~19 µm, and the maximum width is 0.1~19 µm.

9. The lithium-containing precursor of a positive electrode material according to claim 7, wherein the lithium-containing precursor of a positive electrode material comprises at least two sheet-like agglomerates, a gap exists between a sheet-like agglomerate and a sheet-like agglomerate, and the gap is 1 nm-1 µm.

10. The lithium-containing precursor of a positive electrode material according to claim 7, wherein the particle size of the primary particles is less than or equal to 100 nanometers.

11. The lithium-containing precursor of a positive electrode material according to claim 1, wherein in a powder X-ray diffraction pattern using Cu-Kα radiation, diffraction peaks are present at 2θ of 18.6±0.3, 21.2±0.3, 30.5±0.3, 31.7±0.3, 36.4±0.3, 38.0±0.3, 44.1±0.3, 48.4±0.3, 58.3±0.3, 64.2±0.3, and 67.7±0.3 degrees;
and/or in a powder X-ray diffraction pattern using Cu-Kα radiation, the ratio of the peak intensity Iₐ of the peak at 20 of 18.6±0.3 degrees to the peak intensity I_{b} of the peak at 20 of 44.1±0.3 degrees is greater than or equal to 0.2 and less than 1.0;
and/or in a powder X-ray diffraction pattern using Cu-Kα radiation, the ratio of the half-peak width α of the peak present at 2θ of 18.6±0.3 degrees to the half-peak width β of the peak present at 20 of 44.1±0.3 degrees is 1.1 to 1.4;
and/or in a powder X-ray diffraction pattern using Cu-Kα radiation, the half-peak width α of the peak at 20 of 18.6±0.3 degrees is 0.60-0.80 degrees, and the half-peak width β of the peak at 2θ of 44.1±0.3 degrees is 0.40-0.60 degrees.

12. The lithium-containing precursor of a positive electrode material according to claim 1, wherein the tapped bulk density of the lithium-containing precursor of a positive electrode material is 0.8-2.5 g/cm³, and the loose bulk density is 0.4-0.9 g/cm³.

13. The lithium-containing precursor of a positive electrode material according to claim 1, wherein the D90 determined from the particle size distribution measurement value of the lithium-containing precursor of a positive electrode material is 5~38 µm, the D10 is 0.5~7.6 µm, and the D50 is 1.0~12 µm.

14. The lithium-containing precursor of a positive electrode material according to claim 1, wherein the ratio of the specific surface area to D50 of the lithium-containing precursor of a positive electrode material is 3×10⁶ to 15×10⁶ m/g.

15. The lithium-containing precursor of a positive electrode material according to claim 14, wherein the specific surface area of the lithium-containing precursor of a positive electrode material is 2 to 20 m²/g.

16. The lithium-containing precursor of a positive electrode material according to claim 1, wherein the calcium ion content in the lithium-containing precursor of a positive electrode material is below 500 ppm;
and/or the magnesium ion content in the lithium-containing precursor of a positive electrode material is below 500 ppm;
and/or the sulfate radical content in the lithium-containing precursor of a positive electrode material is below 50 ppm;
and/or the sodium ion content in the lithium-containing precursor of a positive electrode material is below 50 ppm;
and/or the respective contents of chloride radical, phosphate radical, and oxalate radical in the lithium-containing precursor of a positive electrode material are each below 100 ppm.

17. The lithium-containing precursor of a positive electrode material according to claim 1, wherein the crystal structure of the lithium-containing precursor of a positive electrode material is a layered structure;
and/or the crystal form of the lithium-containing precursor of a positive electrode material is one or more of spinel type, cubic type, and octahedral type.

18. The lithium-containing precursor of a positive electrode material according to claim 1, wherein the initial discharge capacity at 0.1C of the lithium-containing precursor of a positive electrode material at a charge/discharge voltage of 3.0 to 4.4V is below 130 mAh/g.

19. A method for preparing a lithium-containing precursor of a positive electrode material, comprising the following steps:
preparing a mixed solution of lithium nitrate, nickel nitrate, cobalt nitrate, and manganese nitrate;
performing an atomization roasting treatment on the mixed solution to obtain a lithium-containing precursor of a positive electrode material, the temperature of the atomization roasting treatment being 400°C-1000°C, and the air-to-gas ratio of the roasting furnace is ≤ 10;
the lithium-containing precursor of a positive electrode material satisfies the chemical formula Liₐ(NiₓCo_{y}Mn_{1-x-y})O₍₁₊ₐ₎ (Li₂CO₃)_{z}, wherein a is 0.10~1.08; 0 < x < 1, 0 < y < 1, and x + y < 1; z is greater than 0 and less than or equal to 0.354, and the carbon content thereof is greater than 0 and less than or equal to 6.2 wt%.

20. A positive electrode material, wherein the positive electrode material is formed by sintering a lithium-containing precursor of a positive electrode material, the lithium-containing precursor of a positive electrode material satisfies the chemical formula Liₐ(NiₓCo_{y}Mn_{1-x-y})O₍₁₊ₐ₎ (Li₂CO₃)_{z}, wherein a is 0.10~1.08; 0 < x < 1, 0 < y < 1, and x + y < 1; z is greater than 0 and less than or equal to 0.354, and the carbon content thereof is greater than 0 and less than or equal to 6.2 wt%.
